# EUROPEAN PATENT APPLICATION

(11) **EP 1 095 956 A2**
(43) Date of publication of application: **02.05.2001**
(21) Application number: 00309536.1
(22) Date of filing: 30.10.2000
(51) Int. Cl.: C08G 18/10, C08G 18/38, C08G 18/40, C08G 18/75

(54) **Thermoset Polyurethane resin and method for the production thereof**

(30) Priority: 28.10.1999 JP 30652499; 29.10.1999 JP 30788399; 29.10.1999 JP 30788499; 20.01.2000 JP 2000011114; 20.01.2000 JP 2000011115
(71) Applicant: Mitsui Chemicals, Inc., Tokyo 100-6070 (JP)
(72) Inventor: Haseyama, Ryuuji, Chigasaki-shi, Kanagawa (JP); Yoshida, Yoshio, Michida-shi, Tokyo (JP); Tsutsui, Tomoki, Yokohama-shi, Kanagawa (JP); Koga, Nobuhito, Yokohama-shi, Kanagawa (JP); Sasaoka, Kunio, Yokohama-shi, Kanagawa (JP); Nishiguchi, Daisuke, Yokohama-shi, Kanagawa (JP); Itoh, Hisato, Yokohama-shi, Kanagawa (JP); Sakai, Seijiro, Yokohama-shi, Kanagawa (JP)
(74) Representative: Nicholls, Kathryn Margaret

(57) **Abstract**

A thermoset polyurethane resin having the properties: (i) the Shore A surface hardness is in the range of 50 to 85, (ii) the flexural modulus is in the range of 8 to 80 MPa, (iii) the elongation is in the range of 130 to 600 %, and (iv) no melt mark is observed after exposure to an atmosphere of 110°C for 1000 hours.

## Description

The present invention relates to polyurethane resins and methods for the production thereof. More particularly, the invention relates to polyurethane resins which are useful for forming skin layers of, for example, interior decorative articles of transportation means such as vehicles, ships and aircrafts, building interior articles of shops, offices and other buildings, and general or office furniture, especially, skin layers of various automobile interior decorative articles such as automobile instrument panels.

Automobile interior decorative articles such as automobile dashboards, namely, instrument panels, require long-term heat resistance and light resistance. In the field of the interior decorative articles requiring such heat resistance and weathering resistance, polyvinyl chloride skin (referred to as "PVC skin" hereinafter) has been heretofore widely used as a skin material.

The PVC skin, however, is difficult to be recycled and is disposed of by means of incineration. In recent years, dioxin generated by incineration of PVC has become a serious social problem. The dioxin is taken as one of environmental hormones, and it is pointed out that even at an enviromental level of pollution and that there is a possibility of effecting vital disorders such as, immune suppression and hormone trouble to humans and animals.

From the above viewpoints, it has become necessary to substitute resins having less influence on the environment for PVC as materials of the interior decorative articles mentioned above.

Examples of the substitutive resins include thermoplastic polyolefin (abbreviated to TPO hereinafter) and thermoplastic polyurethane (abbreviated to TPU hereinafter), and studies of them have been earnestly made. The TPO skin, however, still has one or more problems in scratch resistance (resistance to scratch marks on the skin surface with nail), adhesion to polyurethane foam pad (in the post process of integral molding of the skin and polyurethane foam pad), soft touch properties, and etc. On the other hand, the TPU skin is excellent in elongation, processability and adhesion to the polyurethane foam pad, but it still has problems in heat resistance and light resistance. To improve the heat resistance and the light resistance, addition of various stabilizers such as antioxidants and ultraviolet light absorbers to the polyurethane resins has been made, but any resin having properties suitable for the above use applications has not been obtained so far.

Preferred embodiments of the invention may make it possible to attain one or more of the following:
to provide a novel polyurethane resin and a method for the production thereof;
to provide a polyurethane resin which is excellent in scratch resistance, adhesiveness to polyurethane foam pad and soft touch property and which can generate no harmful substances such as dioxins in the incineration disposal, and a method for the production thereof;
to provide a polyurethane resin having a high heat resistance and a light resistance over a long period of time, and a method for the production thereof;
to provide a polyurethane resin which is useful for forming skin layers of, for example, interior decorative articles of transportation means such as vehicles, ships and aircrafts, building interior articles of shops, offices and other buildings, and general or office furniture, especially, skin layers of various automobile interior decorative articles such as automobile instrument panels, and a method for the production thereof;
to provide a polyol composition and a prepolymer which is useful for preparing a polyurethane resin having an excellent heat resistance and a light resistance;
to provide a material for skin layer which is excellent in scratch resistance, adhesiveness to polyurethane foam pad and soft touch properties and which can generate no harmful substances such as dioxins in the incineration disposal, and to provide a laminate using the skin material.

We, the present inventors have made earnest researches and studies of polyurethane resins.

As a result, we have synthesized a novel thermoset polyurethane resin having specific properties as described below and established a process for preparing the resin. Thus, the present invention has been accomplished.

The present invention provides a thermoset polyurethane resin having the following properties:
(i) the Shore A surface hardness is in the range of 50 to 85,
(ii) the flexural modulus is in the range of 8 to 80 MPa,
(iii) the elongation is in the range of 130 to 600 %, and
(iv) no melt mark is observed after exposure to an atmosphere of 110°C for 1000 hours.

The thermoset polyurethane resin of the present invention preferably further has the following properties:
(v) the color difference ΔE₁₁₀ value that indicates a change in color after exposure to an atmosphere of 110°C for 200 hours is not more than 1.5,
(vi) the color difference ΔE₈₃ value that indicates a change in color after exposure to a carbon arc fadeometer with a black panel of 83°C for 200 hours is not more than 1.5, and
(vii) the elongation after exposure to an atmosphere of 110°C for 1200 hours is in the range of 150 to 600 %.

The thermoset polyurethane resin of the present invention preferably further has the following properties:
(viii) the color difference ΔE₁₁₀ value that indicates a change in color after exposure to an atmosphere of 110°C for 400 hours is not more than 1.5,
(ix) the color difference ΔE₈₃ value that indicates a change in color after exposure to a carbon arc fadeometer with a black panel of 83°C for 400 hours is not more than 1.5, and
(x) the elongation after exposure to an atmosphere of 110°C for 2400 hours is in the range of 150 to 600 %.

An embodiment of the thermoset polyurethane resin of the present invention is a two-component type thermoset polyurethane resin obtainable by the reaction of a polyol component (A) with an organic polyisocyanate component (B).

Another embodiment of the present invention is a thermoset polyurethane resin obtainable by the reaction of a polyol component (A) with an organic polyisocyanate component (B), wherein the polyol component (A) comprises at least one compound selected from the group consisting of
(a-1) a polyether polyol obtainable by addition polymerization of an active hydrogen compound with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g; and

another compound of (a-4) a non-amine type glycol having an average functional group number of 1.5 to 2.5, typically 2, and a hydroxyl value of 1000 to 2000 mgKOH/g,
the latter (a-4) compound being in an amount of 8 to 40 parts by weight based on 100 parts by weight of the former compound(s) selected from the group of (a-1), (a-2) and (a-3), and
wherein the organic polyisocyanate component (B) contains a polyfunctional compound obtainable from a polycyclic aliphatic polyisocyanate compound and having 3 or more isocyanate groups, typically being an isocyanurate structure, in an amount of 1 to 40 % by weight based on the whole amount of the organic polyisocyanate component.

A preferred embodiment of the present invention is a thermoset polyurethane resin wherein the organic polyisocyanate component (B) is a mixture of
(b-1) a compound represented by the following formula (F2): 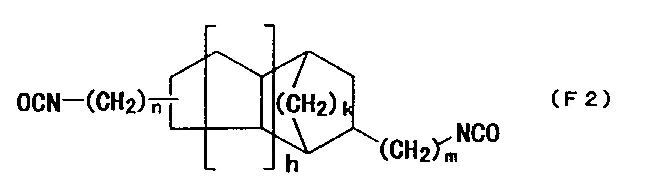 wherein K is an integer of 0 to 2, m and n are each an integer of 1 to 5, and h is an integer of 0 to 2, with the proviso that h and k are not both 0, and
(b-2) a polyfunctional compound obtainable from a compound represented by the formula (F2) and having 3 or more isocyanate groups; and
the mixing weight ratio (b-1)/(b-2) is in the range of 99/1 to 60/40.

In a more preferred embodiment of the present invention, the compound represented by the formula (F2) of the compound (b-1) and those compounds used in the polyfunctional compound (b-2) are each a compound wherein h is 0 and k is 1 in the formula (F2), namely, a compound represented by the following formula (F4).

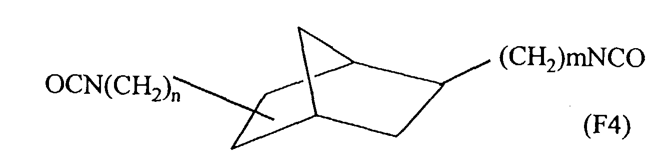

In the present invention, it is preferable that the polyol component (A) comprises the non-amine type glycol (a-4) and a combination of the polyether polyol (a-1) with one or both of the polyester diol (a-2) and the polycarbonate diol (a-3), , wherein the (a-4) compound being in the range of 8 to 40 parts by weight based on 100 parts of the combination, and wherein one or both of the (a-2) compound and the (a-3) compound being in the range of 1 to 50 parts by weight based on 100 to 50 parts by weight of the (a-1) compound .

It is also preferable that the polyol component (A) comprises at least one compound selected from the group consisting of the polyether polyol (a-1), the polyester diol (a-2) and the polycarbonate diol (a-3), and a compound of the non-amine type glycol(a-4) in an amount of 8 to 40 parts by weight based on 100 parts by weight of the former compound(s) selected from the group of (a-1), (a-2) and (a-3), and
further comprises at least one stabilizer (C) selected from the group consisting of an ultraviolet light absorber (c-1), an antioxidant (c-2), a heat stabilizer (c-3) and a multi-functional stabilizer (c-4), in an amount of 0.5 to 5.0 parts by weight based on 100 parts by weight of the compound(s) selected from the group of (a-1), (a-2) and (a-3), and at least one catalyst (D) selected from the group consisting of an urethane-forming catalyst (d-1) and an isocyanurate-forming catalyst (d-2), in an amount of 0.5 to 3.0 parts by weight based on 100 parts by weight of the compound(s) selected from the group of (a-1), (a-2) and (a-3).

In the present invention, the polyol component (A) may further comprise, in addition to the above components, a pigment (E) in an amount of 0.1 to 10 parts by weight based on 100 parts by weight of the former compound selected from the group of (a-1), (a-2) and (a-3).

In another preferred embodiment of the present invention, a thermoset polyurethane resin is disclosed which comprises a benzotriazolyl-alkylbisphenol compound represented by the following formula (F1): 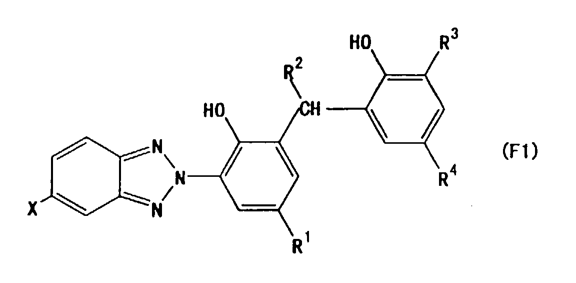 wherein X is a hydrogen atom, a halogen atom, an alkyl group, a cycloalkyl group, an alkoxy group or an alkylaryl group, R¹ is an alkyl group, a cycloalkyl group, an aryl group, an alkoxy group or an arylalkyl group, R² is a hydrogen atom, an alkyl group or an aryl group, R³ and R⁴ are each an alkyl group, a cycloalkyl group, an aryl group or an alkylaryl group, and R³ and R⁴ may be the same or different.

A further embodiment of present invention is a thermoset polyurethane resin wherein the organic polyisocyanate component (B) is a partially urethane modified prepolymer obtainable by subjecting a mixture of the compound (b-1) represented by the formula (F2) and the polyfunctional compound (b-2) obtainable from a compound represented by the formula (F2) and having 3 or more isocyanate groups, in a mixing weight ratio (b-1)/(b-2) of 99/1 to 60/40, to reaction with at least one compound selected from the group consisting of
(a-5) a polyether polyol obtainable by addition polymerization of an active hydrogen compound with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

A preferred embodiment of the present invention is a thermoset polyurethane resin obtainable by the reaction of a polyol component (A) with an organic polyisocyanate component (B), wherein
the polyol component (A) comprises
at least one compound selected from the group consisting of
   (a-1-2) a polyether polyol obtainable by addition polymerization of a non-amine type polyhydric alcohol with an alkylene oxide and having an average functional group number of 2 to 4 and a hydroxyl value of 24 to 120 mgKOH/g,
   (a-2) a polyester diol having a hydroxyl value of 50 to 120 mgKOH/g, and
   (a-3) a polycarbonate diol having a hydroxyl value of 50 to 120 mgKOH/g; and
another compound of (a-4) a non-amine type glycol having an average functional group number of 1.5 to 2.5, typically 2, and a hydroxyl value of 1000 to 2000 mgKOH/g,
the latter (a-4) compound being in an amount of 8 to 40 parts by weight based on 100 parts by weight of the former compound(s) selected from the group of (a-1-2), (a-2) and (a-3), and
wherein the organic polyisocyanate component (B) contains a polyfunctional compound obtainable from a polycyclic aliphatic polyisocyanate compound and having 3 or more isocyanate groups, typically being an isocyanurate structure, in an amount of 1 to 40 % by weight based on the whole amount of the organic polyisocyanate component (B).

Also in this preferred embodiment of the present invention, it is preferable similarly to the above that the polyisocyanate component (B) is a mixture of
(b-1) the compound represented by the formula (F2), and
(b-2) the polyfunctional compound obtainable from a compound represented by the formula (F2) and having 3 or more isocyanate groups, and
the mixing weight ratio (b-1)/(b-2) is in the range of 99/1 to 60/40.

The compound represented by the formula (F2) of the compound (b-1) and those compounds used in the polyfunctional compound (b-2) are each preferably the compound represented by the formula (F4).

Further, it is preferable that the polyol component (A) comprises the non-amine type glycol (a-4) and a combination of the polyether polyol (a-1-2) with one or both of the polyester diol (a-2) and the polycarbonate diol (a-3), wherein the (a-4) compound being in the range of 8 to 40 parts by weight based on 100 parts of the combination, and wherein one or both of the (a-2) compound and the (a-3) compound being in the range of 1 to 50 parts by weight based on 100 to 50 parts by weight of the (a-1-2) compound.

It is also preferable that the polyol component (A) comprises at least one compound selected from the group consisting of the polyether polyol (a-1-2), the polyester diol (a-2) and the polycarbonate diol (a-3), and a compound of the non-amine type glycol(a-4) in an amount of 8 to 40 parts by weight based on 100 parts by weight of the former compound(s) selected from the group of (a-1-2), (a-2) and (a-3), and
further comprises at least one stabilizer (C) selected from the group consisting of an ultraviolet light absorber (c-1), an antioxidant (c-2), a heat stabilizer (c-3) and a multi-functional stabilizer (c-4), in an amount of 0.5 to 5.0 parts by weight based on 100 parts by weight of the compound(s) selected from the group of (a-1-2), (a-2) and (a-3), and at least one catalyst (D) selected from the group consisting of an urethane-forming catalyst (d-1) and an isocyanurate-forming catalyst (d-2), in an amount of 0.5 to 3.0 parts by weight based on 100 parts by weight of the compound(s) selected from the group of (a-1-2), (a-2) and (a-3).

In the present invention, the polyol component (A) may further comprise, in addition to the above components, a pigment (E) in an amount of 0.1 to 10 parts by weight based on 100 parts by weight of the former compound selected from the group of (a-1-2), (a-2) and (a-3).

In the present invention, a thermoset polyurethane resin is disclosed which comprises the benzotriazolyl-alkylbisphenol compound represented by the formula (F1).

A still further embodiment of the present invention is a thermoset polyurethane resin wherein the organic polyisocyanate component (B) is a partially urethane modified prepolymer obtainable by subjecting a mixture of the compound (b-1) represented by the formula (F2) and the polyfunctional compound (b-2) obtainable from a compound represented by the formula (F2) and having 3 or more isocyanate groups, in a mixing weight ratio (b-1)/(b-2) of 99/1 to 60/40, to reaction with at least one compound selected from the group consisting of
(a-5-2) a polyether polyol obtainable by addition polymerization of a non-amine type polyhydric alcohol with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

The present invention also provides a method for the production of the thermoset polyurethane resin having the above specific properties, which comprises subjecting the polyol component (A) to reaction with the organic polyisocyanate component (B). In this process, it is preferable to use a spray molding technique or a RIM technique.

The present invention also provides a sheet or film comprising the thermoset polyurethane resin mentioned above.

There is also provided by the present invention a composite comprising a sheet or film comprising the thermoset polyurethane resin mentioned above, and an urethane foam and/or a core.

The present invention to attain the aforesaid objects, also provides an urethane prepolymer obtainable from a polyol component (Aₚᵣₑ) and an organic polyisocyanate component (B), wherein the organic polyisocyanate component (B) is a mixture of
(b-1) a compound represented by the following formula (F2): 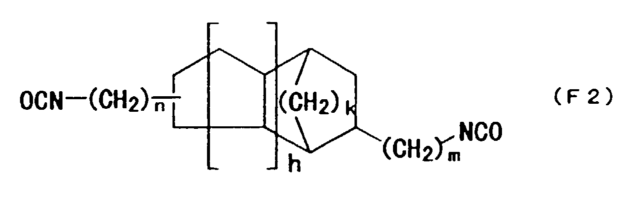 wherein K is an integer of 0 to 2, m and n are each an integer of 1 to 5, and h is an integer of 0 to 2, with the proviso that h and k are not both 0, and
(b-2) a polyfunctional compound obtainable from a compound represented by the formula (F2) and having 3 or more isocyanate groups; and
the mixing weight ratio (b-1)/(b-2) is in the range of 99/1 to 60/40.

In the urethane prepolymer of the present invention, the compound represented by the formula (F2) of the compound (b-1) and those compounds used in the polyfunctional compound (b-2) are each preferably a compound wherein h is 0 and k is 1 in the formula (F2), i.e., a compound represented by the formula (F4). In a more preferred embodiment, the (b-2) compound has an isocyanurate structure.

In a preferred embodiment of the present invention, an urethane prepolymer is disclosed wherein the polyol component (Aₚᵣₑ) is at least one compound selected from the group consisting of
(a-5) a polyether polyol obtainable by addition polymerization of an active hydrogen compound with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

Another preferred embodiment of the present invention discloses an urethane prepolymer wherein the polyol component (Aₚᵣₑ) is at least one compound selected from the group consisting of:
(a-5-2) a polyether polyol obtainable by addition polymerization of a non-amine type polyhydric alcohol with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

The prepolymer of the present invention can become a thermoset polyurethane resin by the reaction with a different polyol component (A).

To attain the aforesaid objects, this invention further provides a polyol composition comprising a polyol component (A) and a benzotriazolyl-alkylbisphenol compound represented by the following formula (F1): 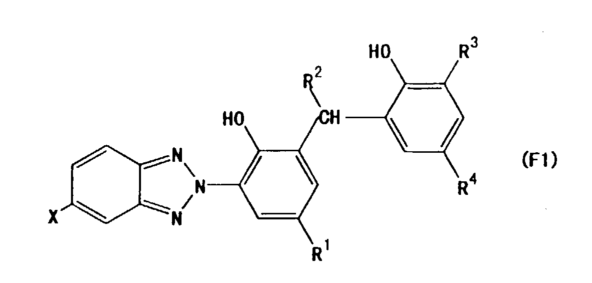 wherein X is a hydrogen atom, a halogen atom, an alkyl group, a cycloalkyl group, an alkoxy group or an alkylaryl group, R¹ is an alkyl group, a cycloalkyl group, an aryl group, an alkoxy group or an arylalkyl group, R² is a hydrogen atom, an alkyl group or an aryl group, R³ and R⁴ are each an alkyl group, a cycloalkyl group, an aryl group or an alkylaryl group, and R³ and R⁴ may be the same or different.

In the formula (Fl) representing the benzotriazolyl-alkylbisphenol compound in the polyol composition of the present invention, it is preferable that R² is hydrogen, R¹, R³ and R⁴ are each an alkyl group of 1 to 8 carbon atoms, and R¹, R³ and R⁴ may be the same or different.

In a preferred embodiment of the polyol composition of the present invention, as the benzotriazolyl-alkylbisphenol compound used is 6-(2-benzotriazolyl)-4-t-octyl-6'-t-butyl-4'-methyl-2,2'-methylenebisphenol, and the benzotriazolyl-alkylbisphenol compound is contained in an amount of 0.01 to 5.0 % by weight.

### DETAILED DESCRIPTION OF THE PREFERRED EMBODIMENT OF THE INVENTION

Now, the present invention is described in detail based on the preferred embodiments.

### 1. Thermoset polyurethane resin

The thermoset polyurethane resin according to the invention has the following properties:
(i) the Shore A surface hardness is in the range of 50 to 85,
(ii) the flexural modulus is in the range of 8 to 80 MPa,
(iii) the elongation is in the range of 130 to 600 %, and
(iv) no melt mark is observed after exposure to an atmosphere of 110°C for 1000 hours.

When the Shore A surface hardness is in the range of 50 to 85, the thermoset polyurethane resin has excellent soft touch properties and shows excellent resin strength. When the Shore A surface hardness is less than 50, the resin strength is liable to be too low. On the other hand, when the Shore A surface hardness exceeds 85, the soft touch properties of the resin are liable to be impaired. The Shore A surface hardness is preferably in the range of 51 to 80.

When the flexural modulus is in the range of 8 to 80 MPa, the thermoset polyurethane resin has excellent soft touch properties and shows excellent resin strength. When the flexural modulus is less than 8 MPa, the resin strength is liable to be too low. On the other hand, when the flexural modulus exceeds 80 MPa, the soft touch properties of the resin are liable to be impaired. The flexural modulus is preferably in the range of 20 to 70.

Since the elongation is not less than 130 %, the thermoset polyurethane resin can avoid the occurrence of "tearing" in the products on the demolding step and when it is in use, and since the elongation is not more than 600 %, the thermoset polyurethane resin can be easily crushed when recycled. The elongation is preferably in the range of 150 to 500 %.

The thermoset polyurethane resin further has properties that no melt mark is observed after exposure to an atmosphere of 110°C for 1000 hours, and hence the design is not impaired for a long period of time even if the resin is used for an automobile instrument panel that is exposed to sunlight for a long period of time.

The term "melt mark" used herein means a change in appearance of a sample surface, that is caused by exposure to heat and is distinguishable by observation with the naked eye, for example, flow mark, crack, crater, shrinkage mark, strain or gloss change.

To form a skin sheet or a skin of a molded product, the thickness of the polyurethane resin is in the range of 0.3 to 3.0 mm, preferably 0.5 to 2.0 mm. When the thickness is not less than 0.3 mm, the polyurethane resin can avoid the occurrence of "tearing" in the products on the demolding step. Therefore, the above range is preferable.

The two-component type thermoset polyurethane resin of the invention has rapid-curing properties and is therefore preferable.

The thermoset polyurethane resin of the invention preferably further has the following properties:
(v) the color difference ΔE₁₁₀ value that indicates a change in color after exposure to an atmosphere of 110°C for 200 hours is not more than 1.5,
(vi) the color difference ΔE₈₃ value that indicates a change in color after exposure to a carbon arc fadeometer with a black panel of 83°C for 200 hours is not more than 1.5, and
(vii) the elongation after exposure to an atmosphere of 110°C for 1200 hours is in the range of 130 to 600 %.

It is preferable that the thermoset polyurethane resin is free from occurrence of melt mark even after measurement of any of the above properties (v), (vi) and (vii), because the design is not impaired over a long period of time even if the resin is used for an automobile instrument panel that is exposed to sunlight for a long period of time.

Since the color difference AE value after exposure to an atmosphere of 110°C or to a fadeometer with a black panel of 83°C for 200 hours is not more than 1.5, the design can be retained over a long period of time even if the resin is used for an automobile instrument panel that is exposed to sunlight. The color difference ΔE₁₁₀ value is preferably not more than 1.3, and the color difference ΔE₈₃ value is preferably not more than 1.3.

Since the elongation of the thermoset polyurethane resin after exposure to an atmosphere of 110°C for 1200 hours is duly high as being not less than 150 %, the safety in the use for an air bag cover specification is much more enhanced. Since the elongation is not more than 600 %, the resin can be easily crushed when recycled. The elongation after exposure to an atmosphere of 110°C for 1200 hours is preferably in the range of 150 to 450%.

The thermoset polyurethane resin of the invention more preferably has the following properties:
(viii) the color difference ΔE₁₁₀ value that indicates a change in color after exposure to an atmosphere of 110°C for 400 hours is not more than 1.5,
(ix) the color difference ΔE₈₃ value that indicates a change in color after exposure to a carbon arc fadeometer with a black panel of 83°C for 400 hours is not more than 1.5, and
(x) the elongation after exposure to an atmosphere of 110°C for 2400 hours is in the range of 150 to 600 %.

It is preferable that the thermoset polyurethane resin is free from occurrence of melt mark even after measurement of any of the above properties (viii), (ix) and (x), because the design is not impaired over a long period of time even if the resin is used for an automobile instrument panel that is exposed to sunlight for a long period of time under severer conditions.

Since the color difference ΔE value after exposure to an atmosphere of 110°C or to a fadeometer with a black panel of 83°C for 400 hours is not more than 1.5, the design can be retained over a long period of time even if the resin is used for an automobile instrument panel that is exposed to sunlight for a long period of time under severer conditions. The color difference ΔE₁₁₀ value is preferably not more than 1.3, and the color difference ΔE₈₃ value is preferably not more than 1.3.

Since the elongation of the thermoset polyurethane resin after exposure to an atmosphere of 110°C for 2400 hours is duly high as being not less than 150 %, the safety in the use for an air bag cover specification is much more enhanced. Since the elongation is not more than 600 %, the resin can be easily crushed when recycled. The elongation after exposure to an atmosphere of 110°C for 2400 hours is preferably in the range of 150 to 450 %.

The above-mentioned property values of the thermoset polyurethane resin of the invention is in accordance with the standards of JIS K 6301⁻¹⁹⁶⁹, and they are values measured by the use of a specimen having a thickness of 1.0 mm ± 0.2 mm, a width of 250 mm ± 10 mm and a length of 300 mm ± 10 mm under the temperature conditions of 23°C ± 3°C.

### 2. Process for preparing thermoset polyurethane resin

The thermoset polyurethane resin of the invention can be prepared by subjecting a polyol component (A) to reaction with an organic polyisocyanate component (B), in the presence of an ultraviolet light absorber, an antioxidant, a heat stabilizer, an urethane-forming catalyst, an isocyanurate-forming catalyst, a pigment, a plasticizer, a flame retardant and other additives when needed, in such a manner that the resulting resin can have the properties (i) to (iv), preferably the properties (v) to (vii), more preferably the properties (viii) to (x).

It is preferable to conduct the reaction of the polyol component (A) with the organic polyisocyanate component (B) in the presence of a stabilizer such as an ultraviolet light absorber, an antioxidant, a heat stabilizer or a multi-functional stabilizer, and a catalyst such as a urethane-forming catalyst or an isocyanurate-forming catalyst.

In the preparation of the thermoset polyurethane resin, it is more preferable to prepare in advance a solution of the polyol component (A) and a solution of the organic polyisocyanate component (B), one or both of which contain the additives, which are to be followed by mixing and reacting the two solutions with each other. Such a thermoset polyurethane resin is usually called a two-component type thermoset polyurethane resin (referred to as "two-component type thermoset polyurethane" simply hereinafter).

In the preparation of the two-component type thermoset polyurethane, it is preferable to use a spray molding technique or a RIM technique. There is no specific limitation on the means of spraying or RIM, and various means are employable. Above all, means exhibiting excellent mixing performance in the reaction of the polyol component (A) with the organic polyisocyanate component (B) are preferably employed.

### 3. Polyol component (A)

The polyol component (A) is a component comprising a polyol, and if necessary, a stabilizer such as an ultraviolet light absorber, an antioxidant or a heat stabilizer, a catalyst such as an urethane-forming catalyst or an isocyanurate-forming catalyst, and other additives.

These constituents are described below.

### 3.1. Polyol

Examples of the polyols to be reacted with the polyisocyanate component in the invention include polyhydric alcohols, polyether polyols (sometimes called polyoxyalkylenepolyether polyols), polyester polyols and polymer polyols. Of these, polyoxyalkylene polyols and polyester polyols are preferably employed.

As a polyol component in the invention, a combination of plural polyols is preferably employed. A preferred combination is a combination of
at least one compound selected from the group consisting of
   (a-1) a polyether polyol obtainable by addition polymerization of an active hydrogen compound with an alkylene oxide and having an average functional group number of 2 to 4 and a hydroxyl value of 24 to 120 mgKOH/g,
   (a-2) a polyester diol having a hydroxyl value of 50 to 120 mgKOH/g, and
   (a-3) a polycarbonate diol having a hydroxyl value of 50 to 120 mgKOH/g, with
another compound of (a-4) a non-amine type glycol having an average functional group number of 1.5 to 2.5, typically 2, and a hydroxyl value of 1000 to 2000 mgKOH/g.

Although the amount ratio of the polyols can be properly determined so as to satisfy the properties of the thermoset polyurethane resin of the invention, the amount of the non-amine type glycol (a-4) having an average functional group number of 1.5 to 2.5, typically 2, and a hydroxyl value of 1000 to 2000 mgKOH/g is in the range of 8 to 40 parts by weight, preferably 10 to 35 parts by weight, based on 100 parts by weight of compound(s) selected from the group consisting of
(a-1) a polyether polyol obtainable by addition polymerization of an active hydrogen compound with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g.

More preferably, the polyol component (A) may contain as a portion a mixture of the polyether polyol (a-1) with one or both of the polyester diol (a-2) and the polycarbonate diol (a-3), and as another portion the non-amine type glycol (a-4), wherein the mixture as the former portion being of 100 to 50 parts by weight of the polyether polyol (a-1) and 1 to 50 parts by weight of the polyester diol (a-2) and/or the polycarbonate diol (a-3), and the non-amine type glycol (a-4) being in an amount of 8 to 40 parts by weight based on 100 parts by weight of the mixture. .

In order to obtain such a thermoset polyurethane resin having more preferred properties as mentioned above, it is preferable to use the following combination of plural polyols as the polyol component, namely, a combination of
at least one compound selected from the group consisting of
   (a-1-2) a polyether polyol obtainable by addition polymerization of a non-amine type polyhydric alcohol with an alkylene oxide and having an average functional group number of 2 to 4 and a hydroxyl value of 24 to 120 mgKOH/g,
   (a-2) a polyester diol having a hydroxyl value of 50 to 120 mgKOH/g, and
   (a-3) a polycarbonate diol having a hydroxyl value of 50 to 120 mgKOH/g, and
another compound of (a-4) a non-amine type glycol having an average functional group number of 1.5 to 2.5, typically 2, and a hydroxyl value of 1000 to 2000 mgKOH/g.

Although the amount ratio of the polyols can be properly determined so as to satisfy the properties of the thermoset polyurethane resin of the invention, the amount of the non-amine type glycol (a-4) having an average functional group number of 1.5 to 2.5, typically 2, and a hydroxyl value of 1000 to 2000 mgKOH/g is in the range of 8 to 40 parts by weight, preferably 10 to 35 parts by weight, based on 100 parts by weight of compound(s) selected from the group consisting of
(a-1-2) a polyether polyol obtainable by addition polymerization of a non-amine type polyhydric alcohol with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g.

More preferably, the polyol component (A) may contain as a portion a mixture of the polyether polyol (a-1-2) with one or both of the polyester diol (a-2) and the polycarbonate diol (a-3), and as another portion the non-amine type glycol (a-4), wherein the mixture as the former portion being of 100 to 50 parts by weight of the polyether polyol (a-1) and 1 to 50 parts by weight of the polyester diol (a-2) and/or the polycarbonate diol (a-3), and the non-amine type glycol (a-4) being in an amount of 8 to 40 parts by weight based on 100 parts by weight of the mixture.

The polyol mixture preferably further comprises at least one stabilizer (C) selected from the group consisting of an ultraviolet light absorber (c-1), an antioxidant (c-2), a heat stabilizer (c-3) and a multi-functional stabilizer (c-4), at least one catalyst (D) selected from the group consisting of an urethane-forming catalyst (d-1) and an isocyanurate-forming catalyst, and a pigment (E). There is no specific limitation on the amount ratio, and for example, the stabilizer(s) (C) selected from the group consisting of an ultraviolet light absorber (c-1), an antioxidant (c-2), a heat stabilizer (c-3) and a multi-functional stabilizer (c-4) may be desirably contained in an amount of 0.01 to 5.0 parts by weight, preferably 0.05 to 5.0 parts by weight; the catalyst(s) (D) selected from the group consisting of an urethane-forming catalyst (d-1) and an isocyanurate-forming catalyst (d-2) is desirably contained in an amount of 0.5 to 3.0 parts by weight, preferably 0.6 to 2.0 parts by weight; and the pigment(s) (D) is desirably contained in an amount of 0.1 to 10.0 parts by weight, preferably 0.5 to 8.0 parts by weight, each amount being based on 100 parts by weight of the compound(s) selected from the group of (a-1), (a-2) and (a-3) or based on 100 parts by weight of the compound(s) selected from the group of (a-1-2), (a-2) and (a-3).

### 3.2.1. Polyether polyol (a-1)

The polyether polyol (a-1) for use in the invention is a polyether polyol obtainable by addition polymerization of an active hydrogen compound with an alkylene oxide and having an average functional group number of 2 to 4 and a hydroxyl value of 24 to 120 mgKOH/g, and is preferably one having an average functional group number of 2 to 4 and a hydroxyl value of 24 to 55 mgKOH/g.

When the hydroxyl value is not less than 24 mgKOH/g, the polyether polyol has low viscosity and can be easily handled. When the hydroxyl value is not more than 120 mgKOH/g, the resulting polyurethane resin has high elongation. Therefore, the above range is preferable.

When the average functional group number is not less than 2, the curing reaction of the polyol component (A) with the polyisocyanate component (B) is enhanced. When the average functional group number is not more than 4, the polyurethane resin has high elongation. Therefore, the above range is preferable.

### 3.2.1.1. Active hydrogen compound for preparing polyether polyol (a-1)

The active hydrogen compound used as an initiator in the preparation of the polyoxyalkylene polyol is, for example, an active hydrogen compound having an active hydrogen atom on an oxygen atom or an active hydrogen compound having an active hydrogen atom on a nitrogen atom.

### (1) Active hydrogen compound having active hydrogen atom on oxygen atom

The active hydrogen compound having an active hydrogen atom on an oxygen atom that is used as the active hydrogen compound in the process of the invention is, for example water, a carboxylic acid having 1 to 20 carbon atoms, a polycarboxylic acid having 2 to 20 carbon atoms and 2 to 6 carboxyl groups, a carbamic acid, an alcohol having 1 to 20 carbon atoms, a polyhydric alcohol having 2 to 20 carbon atoms and 2 to 8 hydroxyl groups, a saccharide or a derivative thereof, or an aromatic compound having 6 to 20 carbon atoms and 1 to 3 hydroxyl groups.

Examples of the carboxylic acids having 1 to 20 carbon atoms include formic acid, acetic acid, propionic acid, butyric acid, isobutyric acid, lauric acid, stearic acid, oleic acid, phenylacetic acid, dihydrocinnamic acid, cyclohexanecarboxylic acid, benzoic acid, paramethylbenzoic acid and 2-carboxynaphthalene.

Examples of the polycarboxylic acids having 2 to 20 carbon atoms and 2 to 6 carboxyl groups include oxalic acid, malonic acid, succinic acid, maleic acid, fumaric acid, adipic acid, itaconic acid, butanetetracarboxylic acid, phthalic acid, isophthalic acid, terephthalic acid, trimellitic acid and pyromellitic acid.

Examples of the carbamic acids include N,N-diethylcarbamic acid and N-carboxypyrrolidone.

Examples of the alcohols having 1 to 20 carbon atoms include methanol, ethanol, normal-propanol, isopropanol, normal-butyl alcohol, sec-butyl alcohol, tert-butyl alcohol, isopentyl alcohol, tert-pentyl alcohol, normal-octyl alcohol, lauryl alcohol, cetyl alcohol, cyclopentanol, cyclohexanol, allyl alcohol, crotyl alcohol, methylvinylcarbinol, benzyl alcohol, 1-phenylethyl alcohol, triphenylcarbinol and cinnamyl alcohol.

Examples of the polyhydric alcohols having 2 to 20 carbon atoms and 2 to 8 hydroxyl groups include ethylene glycol, propylene glycol, diethylene glycol, dipropylene glycol, 1,3-propanediol, 1,3-butanediol, 1,4-butanediol, 1,6-hexanediol, 1,4-cyclohexanediol, trimethylolpropane, glycerol, diglycerol, pentaerythritol and dipentaerythritol.

Examples of the saccharides or derivatives thereof include glucose, sorbitol, dextrin, fructose and sucrose.

Examples of the aromatic compounds having 6 to 20 carbon atoms and 1 to 3 hydroxyl groups include phenol, 2-naphthol, 2,6-dihydroxynapthalene and bisphenol A.

The polyalkylene oxide having 2 to 8 terminals and having 1 to 8 hydroxyl groups at the terminals is, for example, a polyalkylene oxide which is polyethylene oxide, polypropylene oxide or a copolymer thereof and which has 2 to 8 terminals and 1 to 8 hydroxyl groups at the terminals.

### (2) Active hydrogen compound having active hydrogen atom on nitrogen atom

The active hydrogen compound having an active hydrogen atom on a nitrogen atom that is used as the active hydrogen compound in the process of the invention is, for example, an aliphatic or aromatic primary amine having 1 to 20 carbon atoms, an aliphatic or aromatic secondary amine having 2 to 20 carbon atoms, a polyamine having 2 to 20 carbon atoms and 2 to 3 primary or secondary amino groups, a saturated cyclic secondary amine having 4 to 20 carbon atoms, an unsaturated cyclic secondary amine having 4 to 20 carbon atoms, a cyclic polyamine having 4 to 20 carbon atoms and 2 to 3 secondary amino groups, an unsubstituted or N-monosubstituted acid amide having 2 to 20 carbon atoms, a 5- to 7-membered cyclic amide, or an imide of a dicarboxylic acid having 4 to 10 carbon atoms.

Examples of the aliphatic or aromatic primary amines having 1 to 20 carbon atoms include methylamine, ethylamine, normal-propylamine, isopropylamine, normal-butylamine, isobutylamine, sec-butylamine, tert-butylamine, cyclohexylamine, benzylamine, β-phenylethylamine, aniline, o-toluidine, m-toluidine and p-toluidine.

Examples of the aliphatic or aromatic secondary amines having 2 to 20 carbon atoms include dimethylamine, methylethylamine, diethylamine, di-normal-propylamine, ethyl-normal-butylamine, methyl-sec-butylamine, dipentylamine, dicyclohexylamine, n-methylaniline and diphenylamine.

Examples of the polyamines having 2 to 20 carbon atoms and 2 to 3 primary or secondary amino groups include ethylenediamine, di(2-aminoethyl)amine, hexamethylenediamine, 4,4'-diaminodiphenylmethane, tri(2-aminoethyl)amine, N,N'-dimethylethylenediamine, N,N'-diethylethylenediamine and di(2-methylaminoethyl)amine.

Examples of the saturated cyclic secondary amines having 4 to 20 carbon atoms include pyrrolidine, piperidine, morpholine and 1,2,3,4-tetrahydroquinoline.

Examples of the unsaturated cyclic secondary amines having 4 to 20 carbon atoms include 3-pyrroline, pyrrole, indole, carbazole, imidazole, pyrazole and purine.

Examples of the cyclic polyamines having 4 to 20 carbon atoms and 2 to 3 secondary amino groups include piperazine, pyrazine and 1,4,7-triazacyclononane.

Examples of the unsubstituted or N-monosubstituted acid amides having 2 to 20 carbon atoms include acetamide, propionamide, N-methylpropionamide, N-methylbenzamide and N-ethylstearamide.

Examples of the 5- to 7-membered cyclic amides include 2-pyrrolidone and ε-caprolactam.

Examples of the imides of dicarboxylic acids having 4 to 10 carbon atoms include succinimide, maleimide and phthalimide.

Of the active hydrogen compounds, preferable are an alcohol having 1 to 20 carbon atoms, a polyhydric alcohol having 2 to 20 carbon atoms and 2 to 8 hydroxyl groups, a saccharide or a derivative thereof, a polyalkylene oxide having 2 to 8 terminals, having 2 to 8 hydroxyl groups at the terminals and having a molecular weight of 100 to 4500, an aliphatic or aromatic secondary amine having 2 to 20 carbon atoms, a polyamine having 2 to 20 carbon atoms and 2 to 3 primary or secondary amino groups, a saturated cyclic secondary amine having 4 to 20 carbon atoms, and a cyclic polyamine having 4 to 20 carbon atoms and 2 to 3 secondary amino groups.

Particularly preferable are a polyhydric alcohol having 2 to 10 carbon atoms and 2 to 4 hydroxyl groups, a polyalkylene oxide which is polyethylene oxide, polypropylene oxide or a copolymer thereof and which has 2 to 6 terminals, 2 to 4 hydroxyl groups at the terminals and a molecular weight of 100 to 4500, a polyamine having 2 to 10 carbon atoms and 2 to 3 secondary amino groups, a saturated cyclic secondary amine having 4 to 10 carbon atoms, and a cyclic polyamine having 4 to 10 carbon atoms and 2 to 3 secondary amino groups.

### 3.2.1.2. Alkylene oxide for preparing polyether polyol (a-1)

Examples of the alkylene oxides include ethylene oxide, propylene oxide, 1,2-butylene oxide, 2,3-butylene oxide, styrene oxide, cyclohexene oxide, epichlorohydrin, epibromohydrin, methyl glycidyl ether, allyl glycidyl ether and phenyl glycidyl ether.

Of the above alkylene oxides, preferable are ethylene oxide, propylene oxide, 1,2-butylene oxide and styrene oxide. Most preferable are ethylene oxide and propylene oxide.

Use of a non-amine type initiator is preferable, because fear of discoloration is remarkably reduced even if the resin is held at high temperatures for a long period of time.

### 3.2.1.3. Polyether polyol (a-1-2)

The polyether polyol (a-1-2) for use in the invention is a polyether polyol obtainable by addition polymerization of a non-amine type polyhydric alcohol with an alkylene oxide and having an average functional group number of 2 to 4 and a hydroxyl value of 24 to 120 mgKOH/g, and is preferably one having an average functional group number of 2 to 4 and a hydroxyl value of 24 to 55 mgKOH/g.

When the hydroxyl value is not less than 24 mgKOH/g, the polyether polyol has low viscosity and can be easily handled. When the hydroxyl value is not more than 120 mgKOH/g, the resulting polyurethane resin has high elongation. Therefore, the above range is preferable.

When the average functional group number is not less than 2, the curing reaction of the polyol component (A) with the polyisocyanate component (B) is enhanced. When the average functional group number is not more than 4, the polyurethane resin has high elongation. Therefore, the above range is preferable.

The polyether polyol may be, for example, a polyether polyol obtainable by addition polymerization of a polyhydric alcohol having 1 to 16 carbon atoms, preferably a polyhydric alcohol having 1 to 10 carbon atoms, as an initiator, with one or more kinds of alkylene oxides.

Examples of the polyhydric alcohols include non-amine type polyhydric alcohols, such as ethylene glycol, propylene glycol, butanediol, hexanediol, neopentyl glycol, diethylene glycol, dipropylene glycol, triethylene glycol, pentanediol, cyclohexanediol, glycerol, trimethylolpropane, trimethylolethane and pentaerythritol. Of these, ethylene glycol, tripropylene glycol, diethylene glycol, glycerol, trimethylpropane, pentaerythritol and diglycerol are preferable.

Examples of the alkylene oxides include ethylene oxide, propylene oxide, 1,2-butylene oxide, 2,3-butylene oxide, styrene oxide, cyclohexene oxide, epichlorohydrin, epibromohydrin, methyl glycidyl ether, allyl glycidyl ether and phenyl glycidyl ether.

Of the above alkylene oxides, preferable are ethylene oxide, propylene oxide, 1,2-butylene oxide and styrene oxide. Most preferable are ethylene oxide and propylene oxide.

Use of the non-amine type initiator is preferable, because fear of discoloration is remarkably reduced even if the resin is held at high temperatures for a long period of time.

### 3.2.2. Polyester diol (a-2)

The polyester diol (a-2) is a polyester diol having a hydroxyl value of 50 to 120 mgKOH/g and is a dehydro-condensate of a non-amine type glycol and a dicarboxylic acid. When the hydroxyl value is not less than 50 mgKOH/g, the melting point of the polyester diol is in such a range that it can be easily handled. When the hydroxyl value is not more than 120 mgKOH/g, the resulting polyurethane resin has a hardness in a more suitable range. Therefore, the above range is preferable. A polyester diol having a hydroxyl value of 52 to 100 mgKOH/g is more preferable.

Examples of the non-amine type glycols include ethylene glycol, propylene glycol, butanediol, hexanediol, neopentyl glycol, diethylene glycol, dipropylene glycol, triethylene glycol, pentanediol and cyclohexanediol. Of these, ethylene glycol, diethylene glycol, propylene glycol and 1,4-butanediol are preferable.

Examples of the dicarboxylic acids include succinic acid, adipic acid, sebacic acid, o-phthalic acid, m-phthalic acid, p-phthalic acid, azelaic acid, suberic acid and ricinoleic acid. Of these, adipic acid and terephthalic acid are preferable.

### 3.2.3. Polycarbonate diol (a-3)

The polycarbonate diol (a-3) is a polycarbonate diol having a hydroxyl value of 50 to 120 mgKOH/g and is obtainable by ester interchange reaction of a non-amine type glycol with dimethyl carbonate.

When the hydroxyl value is not less than 50 mgKOH/g, the melting point of the polycarbonate diol is in an appropriate range. When the hydroxyl value is not more than 120 mgKOH/g, the resulting polyurethane resin has a hardness in a more suitable range. Therefore, the above range is preferable. A polycarbonate diol having a hydroxyl value of 52 to 100 mgKOH/g is more preferable.

Examples of the non-amine type glycols include ethylene glycol, propylene glycol, butanediol, hexanediol, neopentyl glycol, diethylene glycol, triethylene glycol, pentanediol and cyclohexanediol. Of these, ethylene glycol, diethylene glycol, propylene glycol and 1,4-butanediol are preferable.

### 3.2.4. Ratio in use

### 3-2-4-1. Ratio between the compounds (a-1), (a-2) and (a-3)

It is preferable to use the compounds (a-1), (a-2) and (a-3) as in a combination, and especially when the mixing weight ratio of the compound (a-1) to the total of the compounds (a-2) and (a-3) is defined, a more favorable thermoset polyurethane resin can be obtained. Specifically, the (a-1)/((a-2)+(a-3)) mixing weight ratio is in the range of 100/1 to 50/50. When the weight ratio of the compound (a-1) is not less than 50 based on the total of the compounds (a-2) and (a-3), the polyol component has a proper viscosity and can be easily handled. In addition, caprolactam diol, polytetramethylene glycol (PTMEG), polymer polyol (POP) or the like may be used in an amount not detrimental to the properties of the preferable polyols specified above.

### 3-2-4-2. Ratio between the compounds (a-1-2), (a-2) and (a-3)

It is preferable to use the compounds (a-1-2), (a-2) and (a-3) as in a combination, and especially when the mixing weight ratio of the compound (a-1-2) to the total of the compounds (a-2) and (a-3) is defined, a more favorable thermoset polyurethane resin can be obtained. Specifically, the (a-1-2)/((a-2)+(a-3)) mixing weight ratio is in the range of 100/1 to 50/50. When the weight ratio of the compound (a-1-2) is not less than 50 based on the total of the compounds (a-2) and (a-3), the polyol component has a proper viscosity and can be easily handled. In addition, caprolactam diol, polytetramethylene glycol (PTMEG), polymer polyol (POP) or the like may be used in an amount not detrimental to the properties of the preferable polyols specified above.

### 3.2.5. Non-amine type glycol (a-4)

The non-amine type glycol (a-4) for use in the invention is a non-amine type glycol having an average functional group number of 1.5 to 2.5 and a hydroxyl value of 1000 to 2000 mgKOH/g, and is, for example, ethylene glycol, diethylene glycol, propylene glycol, trimethylene glycol, 1,4-butanediol or 1,5-butane diol, preferably ethylene glycol, propylene glycol or 1,4-butanediol. When the hydroxyl group is not less than 1000 mgKOH and not more than 2000 mgKOH, the curing reaction of the polyol component with the polyisocyanate component and the hardness of the polyurethane resin can be kept in favorable ranges. A non-amine type glycol having an average functional group number of 2 is more preferable.

The non-amine type glycol (a-4) is used in an amount of preferably 8 to 40 parts by weight, more preferably 10 to 35 parts by weight, based on 100 parts by weight of the total of the compounds (a-1), (a-2) and (a-3) or based on 100 parts by weight of the total of the compounds (a-1-2), (a-2) and (a-3). When the amount thereof is in the range of 8 to 40 parts by weight, the hardness of the polyurethane resin can be kept in a favorable range.

### 3.2.6. Crosslinking agent

### 3.2.6.1. Polyether polyol crosslinking agent

In the present invention, a hydrogen active compound having an average functional group number of 3 to 6 and a hydroxyl value of 300 to 2000 mgKOH/g or a polyether polyol obtainable by addition polymerization of the above mentioned active hydrogen compound with an alkylene oxide is employable as a crosslinking agent.

The active hydrogen compound is, for example, an active hydrogen compound having an active hydrogen atom on an oxygen atom or an active hydrogen compound having an active hydrogen atom on a nitrogen atom.

### (1) Active hydrogen compound having active hydrogen atom on oxygen atom

The active hydrogen compound having an active hydrogen atom on an oxygen atom that is used as the active hydrogen compound in the process of the invention is, for example, water, a carboxylic acid having 1 to 20 carbon atoms, a polycarboxylic acid having 2 to 20 carbon atoms and 2 to 6 carboxyl groups, a carbamic acid, an alcohol having 1 to 20 carbon atoms, a polyhydric alcohol having 2 to 20 carbon atoms and 2 to 8 hydroxyl groups, a saccharide or a derivative thereof, an aromatic compound having 6 to 20 carbon atoms and 1 to 3 hydroxyl groups, or a polyalkylene oxide having 2 to 8 terminals and having 1 to 8 hydroxyl groups at the terminals.

Examples of the carboxylic acids having 1 to 20 carbon atoms include formic acid, acetic acid, propionic acid, butyric acid, isobutyric acid, lauric acid, stearic acid, oleic acid, phenylacetic acid, dihydrocinnamic acid, cyclohexanecarboxylic acid, benzoic acid, paramethylbenzoic acid and 2-carboxynaphthalene.

Examples of the polycarboxylic acids having 2 to 20 carbon atoms and 2 to 6 carboxyl groups include oxalic acid, malonic acid, succinic acid, maleic acid, fumaric acid, adipic acid, itaconic acid, butanetetracarboxylic acid, phthalic acid, isophthalic acid, terephthalic acid, trimellitic acid and pyromellitic acid.

Examples of the carbamic acids include N,N-diethylcarbamic acid, N-carboxypyrrolidone, N-carboxyaniline and N,N'-dicarboxy-2,4-toluenediamine.

Examples of the alcohols having 1 to 20 carbon atoms include methanol, ethanol, normal-propanol, isopropanol, normal-butyl alcohol, sec-butyl alcohol, tert-butyl alcohol, isopentyl alcohol, tert-pentyl alcohol, normal-octyl alcohol, lauryl alcohol, cetyl alcohol, cyclopentanol, cyclohexanol, allyl alcohol, crotyl alcohol, methylvinylcarbinol, benzyl alcohol, 1-phenylethyl alcohol, triphenylcarbinol and cinnamyl alcohol.

Examples of the polyhydric alcohols having 2 to 20 carbon atoms and 2 to 8 hydroxyl groups include ethylene glycol, propylene glycol, diethylene glycol, dipropylene glycol, 1,3-propanediol, 1,3-butanediol, 1,4-butanediol, 1,6-hexanediol, 1,4-cyclohexanediol, trimethylolpropane, glycerol, diglycerol, pentaerythritol and dipentaerythritol.

Examples of the saccharides or derivatives thereof include glucose, sorbitol, dextrin, fructose and sucrose.

Examples of the aromatic compounds having 6 to 20 carbon atoms and 1 to 3 hydroxyl groups include phenol, 2-naphthol, 2,6-dihydroxynapthalene and bisphenol A.

The polyalkylene oxide having 2 to 8 terminals and having 1 to 8 hydroxyl groups at the terminals is, for example, a polyalkylene oxide which is polyethylene oxide, polypropylene oxide or a copolymer thereof and which has 2 to 8 terminals and 1 to 8 hydroxyl groups at the terminals.

### (2) Active hydrogen compound having active hydrogen atom on nitrogen atom

The active hydrogen compound having an active hydrogen atom on a nitrogen atom that is used as the active hydrogen compound in the process of the invention is, for example, an aliphatic or aromatic primary amine having 1 to 20 carbon atoms, an aliphatic or aromatic secondary amine having 2 to 20 carbon atoms, a polyamine having 2 to 20 carbon atoms and 2 to 3 primary or secondary amino groups, a saturated cyclic secondary amine having 4 to 20 carbon atoms, an unsaturated cyclic secondary amine having 4 to 20 carbon atoms, a cyclic polyamine having 4 to 20 carbon atoms and 2 to 3 secondary amino groups, an unsubstituted or N-monosubstituted acid amide having 2 to 20 carbon atoms, a 5- to 7-membered cyclic amide, or an imide of a dicarboxylic acid having 4 to 10 carbon atoms.

Examples of the aliphatic or aromatic primary amines having 1 to 20 carbon atoms include methylamine, ethylamine, normal-propylamine, isopropylamine, normal-butylamine, isobutylamine, sec-butylamine, tert-butylamine, cyclohexylamine, benzylamine, β-phenylethylamine, aniline, o-toluidine, m-toluidine and p-toluidine.

Examples of the aliphatic or aromatic secondary amines having 2 to 20 carbon atoms include dimethylamine, methylethylamine, diethylamine, di-normal-propylamine, ethyl-normal-butylamine, methyl-sec-butylamine, dipentylamine, dicyclohexylamine, n-methylaniline and diphenylamine.

Examples of the polyamines having 2 to 20 carbon atoms and 2 to 3 primary or secondary amino groups include ethylenediamine, di(2-aminoethyl)amine, hexamethylenediamine, 4,4'-diaminodiphenylmethane, tri(2-aminoethyl)amine, N,N'-dimethylethylenediamine, N.N'-diethylethylenediamine and di(2-methylaminoethyl)amine.

Examples of the saturated cyclic secondary amines having 4 to 20 carbon atoms include pyrrolidine, piperidine, morpholine and 1,2,3,4-tetrahydroquinoline.

Examples of the unsaturated cyclic secondary amines having 4 to 20 carbon atoms include 3-pyrroline, pyrrole, indole, carbazole, imidazole, pyrazole and purine.

Examples of the cyclic polyamines having 4 to 20 carbon atoms and 2 to 3 secondary amino groups include piperazine, pyrazine and 1,4,7-triazacyclononane.

Examples of the unsubstituted or N-monosubstituted acid amides having 2 to 20 carbon atoms include acetamide, propionamide, N-methylpropionamide, N-methylbenzamide and N-ethylstearamide.

Examples of the 5- to 7-membered cyclic amides include 2-pyrrolidone and ε-caprolactam.

Examples of the imides of dicarboxylic acids having 4 to 10 carbon atoms include succinimide, maleimide and phthalimide.

Of the active hydrogen compounds, preferable are water, an alcohol having 1 to 20 carbon atoms, a polyhydric alcohol having 2 to 20 carbon atoms and 2 to 8 hydroxyl groups, a saccharide or a derivative thereof, a polyalkylene oxide having 2 to 8 terminals, having 1 to 8 hydroxyl groups at the terminals and having a molecular weight of 100 to 4500, an aliphatic or aromatic secondary amine having 2 to 20 carbon atoms, a polyamine having 2 to 20 carbon atoms and 2 to 3 primary or secondary amino groups, a saturated cyclic secondary amine having 4 to 10 carbon atoms, and a cyclic polyamine having 4 to 10 carbon atoms and 2 to 3 primary amino groups.

Particularly preferable are a polyhydric alcohol having 2 to 10 carbon atoms and 3 to 6 hydroxyl groups, a polyalkylene oxide which is polyethylene oxide, polypropylene oxide or a copolymer thereof and which has 2 to 6 terminals, 3 to 6 hydroxyl groups at the terminals and a molecular weight of 100 to 4500, a polyamine having 2 to 10 carbon atoms and 3 to 6 secondary amino groups, a saturated cyclic secondary amine having 4 to 10 carbon atoms, and a cyclic polyamine having 4 to 10 carbon atoms and 3 to 6 secondary amino groups.

As the alkylene oxide to be addition polymerized with the active hydrogen compound, ethylene oxide or propylene oxide is preferable.

It is preferable to add the crosslinking agent, because the curing reaction of the polyol component (A) with the isocyanate component (B) may be accelerated, the hardness of the resulting polyurethane resin may be increased, and the heat resistance and the light resistance may be enhanced. Moreover, the degree of crosslinking of the polyurethane resin may be enhanced.

When the average functional group number is not more than 6, the above effects are conspicuous. In particular, the degree of crosslinking of the resulting polyurethane resin may be increased and the elongation may be maintained high. Therefore, the above range is preferable.

The crosslinking agent is used in an amount of preferably 0.1 to 5 parts by weight based on 100 parts by weight of the total of the compounds (a-1), (a-2) and (a-3). When the amount thereof is not less than 0.1 part by weight, the effects of improving heat resistance, etc. are conspicuous. When the average functional group number of the crosslinking agent is not more than 6 or when the amount thereof is not more than 5 parts by weight, the degree of crosslinking of the resulting polyurethane resin may be increased and the elongation may be maintained high. Therefore, the above range is preferable.

### 3.2.6.2. Non-amine type polyether polyol crosslinking agent

In a preferred embodiment of the invention using a combination of (a-1-2), (a-2), (a-3) and (a-4) as the polyol component (A), it is preferable to use, as a crosslinking agent, a polyether polyol obtainable by addition polymerization of a non-amine type polyhydric alcohol having an average functional group number of 3 to 6 and a hydroxyl value of 300 to 2000 mgKOH/g or the aforesaid non-amine type polyhydric alcohol with an alkylene oxide, in place of the crosslinking agent shown in the above section 3.2.6.1.

Examples of the polyhydric alcohols include non-amine type polyhydric alcohols, such as ethylene glycol, propylene glycol, butanediol, hexanediol, neopentyl glycol, diethylene glycol, dipropylene glycol, triethylene glycol, pentanediol, cyclohexanediol, glycerol, trimethylolpropane, trimethylolethane, pentaerythritol and sorbitol. Of these, glycerol, trimethylolpropane, pentaerythritol and sorbitol are preferable.

Examples of the alkylene oxides include ethylene oxide, propylene oxide, 1,2-butylene oxide, 2,3-butylene oxide, styrene oxide, cyclohexene oxide, epichlorohydrin, epibromohydrin, methyl glycidyl ether, allyl glycidyl ether and phenyl glycidyl ether.

Of the above alkylene oxides, preferable are ethylene oxide and propylene oxide.

It is preferable to add the crosslinking agent, because the curing reaction of the polyol component (A) with the isocyanate component (B) can be accelerated, the hardness of the resulting polyurethane resin can be increased, and the heat resistance and the light resistance can be enhanced. Moreover, the degree of crosslinking of the polyurethane resin can be enhanced.

When the average functional group number is not more than 6, the above effects are conspicuous. In particular, the degree of crosslinking of the resulting polyurethane resin may be increased and the elongation may be maintained high. Therefore, the above range is preferable.

The crosslinking agent is used in an amount of preferably 0.1 to 5 parts by weight based on 100 parts by weight of the total of the compounds (a-1-2), (a-2) and (a-3). When the amount thereof is not less than 0.1 part by weight, the effects of improving heat resistance, etc. are conspicuous. When the average functional group number of the crosslinking agent is not more than 6 or when the amount thereof is not more than 5 parts by weight, the degree of crosslinking of the resulting polyurethane resin may be increased and the elongation can be maintained high. Therefore, the above range is preferable.

### 3.3. Stabilizer (C)

The stabilizer (C) for use in the invention is at least one stabilizer selected from the group consisting of an ultraviolet light absorber (c-1), an antioxidant (c-2), a heat stabilizer (c-3) and a multi-functional stabilizer (c-4). The stabilizer (C) is added in an amount of 0.01 to 5.0 parts by weight, preferably 0.5 to 5.0 parts by weight, based on 100 parts by weight of the total of the compounds (a-1), (a-2) and (a-3) or based on 100 parts by weight of the total of the compounds (a-1-2), (a-2) and (a-3). When the amount of the stabilizer is not less than 0.01 part by weight, the heat resistance and the light resistance of the resulting polyurethane resin may be remarkably enhanced. When the amount thereof is not more than 5.0 parts by weight, bleed-out of the stabilizer onto the surface of the polyurethane resin may be prevented to thereby maintain adhesion to a polyurethane foam pad high. Moreover, whitening of the polyurethane resin surface may be prevented. Therefore, the above range is preferable.

The ultraviolet light absorber, antioxidant, heat stabilizer and multi-functional stabilizer may be used singly or in combination.

### 3.3.1. Ultraviolet light absorber (c-1)

The ultraviolet light absorber is a stabilizer having an ability of absorbing ultraviolet light, and is not specifically limited. The ultraviolet light absorber is, for example, a benzophenone type ultraviolet light absorber, a benzotriazole type ultraviolet light absorber, a hindered amine type ultraviolet light absorber, a salicylate type ultraviolet light absorber, a cyanoacrylate type ultraviolet light absorber, an acrylonitrile type ultraviolet light absorber, or a nickel complex salt or cobalt complex salt type ultraviolet light absorber.

As a usually employable ultraviolet light absorber, the benzophenone type ultraviolet light absorber and/or the benzotriazole type ultraviolet light absorber is particularly preferable, and some examples are given below.

Examples of the bezophenone type ultraviolet light absorbers include 2-hydroxy-4-methoxybenzophenone, 2,4-dihydroxybenzophenone, 2-hydroxy-4-n-octoxybenzophenone, 2-hydroxy-4-methoxy-2'-carboxybenzophenone, 2,2'-dihydroxy-4,4'-dimethoxybenzophenone, 2-hydroxy-4-benzoyloxybenzophenone, 2,2'-dihydroxy-4-methoxybenzophenone, 2-hydroxy-4-methoxy-5-sulfonebenzophenone, 2,2',4,4'-tetrahydroxybenzophenone, 2,2'-dihydroxy-4,4'-dimethoxybenzophenone, 2-hydroxy-5-chlorobenzophenone and bis(2-methoxy-4-hydroxy-5-benzoylphenyl)methane, without limiting thereto.

Commercially available benzophenone type ultraviolet light absorbers are also employable, and examples thereof include, as 2,4-dihydroxybenzophenone, SEESORB 100 (Shiburo Kasei), Biosorb 100 (Kyodo), KEMISORB 10 (Kemipuro Kasei), ASL 23 (Shonan Kagaku Kogyo), UVINUL 400 (BASF) and Inhibitor DHBP (Eastman Kodak); as 2-hydroxy-4-methoxybenzophenone, Sumisorb 110 (Sumitomo), SEESORB 101 (Shiburo Kasei), Biosorb 110 (Kyodo), KEMISORB 11 (Kemipuro Kasei), ASL 24 (Shonan Kagaku Kogyo), UVINUL M-40 (BASF), Cyasorb UV 9 (ACC) and Tomisorb 300 (Yoshitomi); as 2-hydroxy-4-methoxybenzophenone-5-sulfonic acid, SEESORB 101 S (Shiburo Kasei), KEMISORB 11 S (Kemipuro Kasei), ASL 24 S, 24 ST (Shonan Kagaku Kogyo), UVINUL MS-40 (BASF), Cyasorb UV 284 (ACC) and Harisorb 101S (Yoshitomi); as 2-hydroxy-4-n-octoxybenzophenone, Adekastab 1413 (Asahi Denka), Sumisorb 130 (Sumitomo), SEESORB 102 (Shiburo Kasei), KEMISORB 12 (Kemipuro Kasei), Biosorb 530 (Kyodo), Cyasorb UV 531 (ACC), Tomisorb 800 (Yoshitomi) and Harisorb 108 (Harima); as 2-hydroxy-4-n-dodecyloxybenzophenone, Inhibitor DHBP (Eastman Kodak), SEESORB 103 (Shiburo Kasei), KEMISORB 13 (Kemipuro Kasei) and UV-ehek Ald-320 (Fero); as bis(5-benzoyl-4-hydroxy-2-methoxyphenyl)methane, Adekastab LA-51 (Asahi Denka); as 2,2'-dihydroxy-4-methoxybenzophenone, KEMISORB 111 (Kemipuro Kasei) and Cyasorb UV 24 (ACC); and as 2,2'-dihydroxy-4,4'-dimethoxybenzophenone, UVINUL D-49 (BASF), without limiting thereto.

Examples of the benzotriazole type ultraviolet light absorbers include 2-(2'-hydroxyphenyl)benzotriazole, 2-(2'-hydroxy-5'-methylphenyl)benzotriazole, 2-(2'-hydroxy-5'-methylphenyl)-5-carboxylic acid butyl ester benzotriazole, 2-(2'-hydroxy-5'-methylphenyl)-5, 6-dichlorobenzotriazole, 2-(2'-hydroxy-5'-methylphenyl)-5-ethylsulfonebenzotriazole, 2-(2'-hydroxy-5'-t-butylphenyl)-5-chlorobenzotriazole, 2-(2'-hydroxy-5'-t-butylphenyl)benzotriazole, 2-(2'-hydroxy-5'-aminophenyl)benzotriazole, 2-(2'-hydroxy-3',5'-dimethylphenyl)benzotriazole, 2-(2'-hydroxy-3',5'-dimethylphenyl)-5-methoxybenzotriazole, 2-(2'-methyl-4'-hydroxyphenyl)benzotriazole, 2-(2'-stearyloxy-3',5'-dimethylphenyl)-5-methylbenzotriazole, 2-(2'-hydroxy-5-carboxy phenyl)benzotriazole ethyl ester, 2-(2'-hydroxy-3'-methyl-5'-t-butylphenyl)benzotriazole, 2-(2'-hydroxy-3',5'-t-butylphenyl)-5'-chlorobenzotriazole, 2-(2'-hydroxy-3'-t-butyl-5'-methylphenyl)-5-chlorobenzotriazole, 2-(2'-hydroxy-5'-methoxyphenyl)benzotriazole, 2-(2'-hydroxy-3',5'-di-t-butylphenyl)-5-chlorobenzotriazole, 2-(2'-hydroxy-5'-cylcohexylphenyl)benzotriazole, 2-(2'-hydroxy-4',5'-dimethylphenyl)-5-carboxylic acid benzotriazole butyl ester, 2-(2'-hydroxy-3',5'-dichlorophenyl)benzotriazole, 2-(2'-hydroxy-4',5'-dichlorophenyl)benzotriazole, 2-(2'-hydroxy-3',5'-dimethylphenyl)-5-ethylsulfonebenzotriazole, 2-(2'-hydroxy-4'-octoxyphenyl)benzotriazole, 2-(2'-hydroxy-5'-methoxyphenyl)-5-methylbenzotriazole, 2-(2'-hydroxy-5'-methylphenyl)-5-carboxylic acid ester benzotriazole and 2-(2'-acetoxy-5'-methylphenyl)benzotriazole, without limiting thereto. Examples of commercially available benzotriazole type ultraviolet light absorbers include, as 2-(2'-hydroxy-5'-methylphenyl)benzotriazole, Adekastab LA-32 (Asahi Denka), Sumisorb 200 (Sumitomo), SEESORB 701 (Shiburo Kasei), TINUVIN-P (Ciba-Geigy), KEMISORB 71 (Kemipuro Kasei), Biosorb 520 (Kyodo) and JF-77 (Johoku); as 2-[2'-hydroxy-3',5'-bis(α,α-dimethylbenzyl)phenyl)benzotriazole, TINUVIN-234 (Ciba-Geigy); as 2-(2'-hydroxy-3',5'-di-t-butylphenyl)benzotriazole, Adekastab LA-38 (Asahi Denka), Sumisorb 320 (Sumitomo), SEESORB 705 (Shiburo Kasei), TINUVIN-320 (Ciba-Geigy) and Biosorb 582 (Kyodo); as 2-(2'-hydroxy-3'-t-butyl-5'-methylphenyl)-5-chlorobenzotriazole, Adekastab LA-36 (Asahi Denka), Sumisorb 300 (Sumitomo), SEESORB 703 (Shiburo Kaasei), TINUVIN-326 (Ciba-Geigy), Biosorb (Kyodo), Tomisorb (Yoshitomi) and JF-600 (Johoku); as 2-(2'-hydroxy-3',5'-di-t-butylphenyl)-5-chlorobenzotriazole, Adekastab LA-34 (Asahi Denka), SEESORB 702 (Shiburo Kasei), TINUVIN-327 (Ciba-Geigy), KEMISORB 72 (Kemipuro Kasei) and Biosorb 580 (Kyodo); as 2-(2'-hydroxy-3',5'-di-t-amyl)benzotriazole, Sumisorb 350 (Sumitomo), SEESORB 704 (Shiburo Kasei), TINUVIN-328 (Ciba-Geigy) and Biosorb 591 (Kyodo); as 2-(2'-hydroxy-5'-t-octylphenyl)benzotriazole, Sumisorb 340 (Sumitomo), SEESORB 709 (Shiburo Kasei), Biosorb 583 (Kyodo), JF-83 (Johoku) and Cyasorb UV5411 (ACC); and as 2,2'-methylenebis[4-(1,1,3,3-tetramethylbutyl)-6-(2N-benzotriazole-2-yl)phenol], Adekastab LA-31 (Asahi Denka), without limiting thereto.

Examples of the salicylate type ultraviolet light absorbers include phenyl salicylate, p-tert-butylphenyl salicylate and p-octylphenyl salicylate, without limiting thereto. Examples of commercially available salicylate type ultraviolet light absorbers include, as phenyl salicylate, SEESORB 201 (Shiburo Kasei), Salol P (Iwaki) and KEMISORB 21 (Kemipuro Kasei); and as 4-t-butylphenyl salicylate, SEESORB 202 (Shiburo Kasei), Butysalol (Iwaki), KEMISORB 28 (Kemipuro Kasei) and DICTBS (Nippon), without limiting thereto.

Examples of the cyanoacrylate type ultraviolet light absorbers include ethyl-2-cyano-3,3'-diphenyl acrylate, methyl-2-cyano-3-methyl-3-(p-methoxyphenyl)acrylate and butyl-2-cyano-3-methyl-3-(p-methoxyphenyl)acrylate, without limiting thereto. Examples of commercially available cyanoacrylate type ultraviolet light absorbers include, as ethyl-2-cyano-3,3'-diphenyl acrylate, SEESORB 501 (Shiburo Kasei), Biosorb 910 (Kyodo), Yuhisolator 300 (Daiichi Kasei Kogyo) and UVINUL N-589 (BASF); and as 2-ethylhexyl-2-cyano-3,3'-diphenyl acrylate, UVINUL N-589 (BASF), without limiting thereto.

Examples of the nickel complex salt type ultraviolet light absorbers include nickelbis(octylphenyl)sulfide, 2,2'-thiobis(4-tert-octylphenolate)-n-butylamine nickel(II), 2-2'-thiobis (4-tert-octylphenolate)-2-ethylhexylamine nickel(II) and 2,2'-thiobis(4-tert-octylphenolate) triethanolamine nickel(II), without limiting thereto.

Examples of the hindered amine type ultraviolet light absorbers include bis(2,2,6,6-tetramethyl-4-piperidyl)sebacate, bis(1,2,2,6,6-pentamethyl-4-piperidyl)sebacate, 2-methyl-2-(2,2,6,6-tetramethyl-4-piperidyl)amino-N-(2,2,6,6-tetramethyl-4-piperidyl)propionamide, bis(1,2,2,6,6-pentamethyl-4-piperidyl)-2-(3,5-di-t-butyl-4-hydroxybenzyl)-2-butyl malonate, tetrakis((2,2,6,6-tetramethyl-4-piperidyl)-1,2,3,4-butanetetracarboxylate, poly[{6-(1,1,3,3-tetramethylbutyl)imino-1,3,5,-triazine-2,4-diyl}{(2,2,6,6-tetramethyl-4-piperidyl)imino}hexamethylene{(2,2,6,6-tetramethyl-4-piperidyl)imino}], poly[(6-morpholino-1,3,5-triazine-2,4-diyl){(2,2,6,6-tetramethyl-4-piperidyl)imino}hexamethylene({2,2,6,6-tetramethyl-4-piperidyl)imino}], polycondensate of dimethyl succinate and 1-(2-hydroxyethyl)-4-hydroxy-2,2,6,6-tetramethylpiperidine, polycondensate of N,N'-bis(3-aminopropyl)ethylenediamine and 2,4-bis[N-butyl-N-(1,2,2,6,6-pentamethyl-4-piperidyl)amino]-6-chloro-1,3,5-triazine, polycondensate of 1,2,2,6,6-pentamethyl-4-piperidinol, 3,9-bis(2-hydroxy-1,1-dimethylethyl)-2,4,8,10-tetraoxaspiro[5.5]undecane and 1,2,3,4-butanetetracarboxylic acid, and bis(1-octoxy-2,2,6,6-tetramethyl-4-piperidyl)sebacate, without limiting thereto. Examples of commercially available hindered amine type ultraviolet light absorbers include, as bis(2,2,6,6-tetramethyl-4-piperidinyl)sebacate, TINUVIN-770 (Ciba-Geigy), Sanol LS-770 (Sankyo) and Adekastab LA-77 (Asahi Denka); as bis(N-methyl-2,2,6,6-tetramethyl-4-piperidinyl)sebacate, Tinuvin-765 (Ciba-Geigy) and SANOL LS 765 (Sankyo); as bis(1,2,2,6,6-pentamethyl-4-piperidinyl)-2-(3,5-di-tetra-butyl-4-hydroxybenzyl)-2-butylmalonate, TINUVIN-144 (Ciba-Geigy); as tetrakis(2,2,6,6-tetramethyl-4-piperidyl)-1,2,3,4-butanetetracarboxylate, Adekastab LA-57 (Asahi Denka); as tetrakis(1,2,2,6,6-pentamethyl-4-piperidyl)-1,2,3,4-butanetetracarboxylate, Adekastab LA-52 (Asahi Denka); as 2,2,6,6-tetramethyl-4-piperidyl/tridecyl)-1,2,3,4-butanetetracarboxylate, Adekastab LA-67 (Asahi Denka); and as 1,2,2,6,6-pentamethyl-4-piperidyl/tridecyl)-1,2,3,4-butanetetracarboxylate, Adekastab LA-62 (Asahi Denka), without limiting thereto.

Further, high-molecular weight ultraviolet light absorbers are commercially available, and for example, MARK LA-51 and MARK LA-31 from Asahi Denka, SEESORB 706 from Shiburo Kasei, and UVA 101 from Takemoto Yushi are utilizable.

The ultraviolet light absorber (c-1) is used in an amount of preferably 0.01 to 10 parts by weight based on 100 parts by weight of the polyurethane resin. If the amount thereof is smaller than 0.01 part by weight, the weathering resistance of the polyurethane resin is not sufficiently enhanced. On the other hand, if the amount thereof is larger than 10 parts by weight, a problem of bleeding on the resin surface together with other additives takes place. Of the above range, a range of 0.1 to 3 parts by weight is particularly preferable.

### 3.3.2. Antioxidant (c-2)

The antioxidant is a stabilizer having an anti-oxidizing ability, and is not specifically limited. The antioxidant is, for example, a hindered phenol type stabilizer, an amine type stabilizer, a phosphorus type stabilizer or a sulfur type stabilizer.

Examples of the hindered phenol type antioxidants include 3,9-bis(2-(3-(3-t-butyl-4-hydroxy-5-methylphenyl)propionyloxy)-1,1-dimethylethyl)-2,4,8,10-tetraoxaspiro[5.5]undecane, 1,3,5-tris(4-t-butyl-3-hydroxy-2,6-dimethylbenzyl)isocyanate, tetrakis[3-(3,5-di-t-butyl-4-hydroxyphenyl)propionate], n-octadecyl-3-(3,5-di-t-butyl-4-hydroxyphenyl)propionate, triethylene glycol bis[2-{3-(3-t-butyl-4-hydroxy-5-methylphenyl)propionate}], 2,2'-ethylidenebis(4,6-di-t-butylphenol), 2,2'-methylenebis (4-methyl-6-t-butylphenol), 4,4'-thiobis(3-methyl-6-t-butylphenol) and 2,6-di-t-butyl-4-methylphenol, without limiting thereto.

Examples of the phosphorus type stabilizers include phosphites, such as tridecyl phosphite, trisnonylphenyl phosphite, tris-2,4-di-t-butylphenyl phosphite and tetrakis-2,4-di-t-butylphenyl-4,4'-biphenylene diphosphite; and hydrazines, such as N-salicyloyl-N'-aldehydehydrazine, without limiting thereto.

Examples of the sulfur type stabilizers include laurylstearyl thiodipropionate, dilauryl-3,3'-thiodipropionate, dimyristyl-3,3'-thiodipropionate, distearyl-3.3'-thiodipropionate and pentaerythritol tetrakis(3-laurylthiopropionate).

Commercially available antioxidants are also available, and examples thereof include hindered phenol type stabilizers, such as IRGANOX 245, IRGANOX 259, IRGANOX 1010 and IRGANOX 1035 from Ciba-Geigy, and phosphorus compounds, such as JP310 and JP33E from Johoku Kagaku Kogyo.

### 3.3.3. Heat stabilizer (c-3)

The heat stabilizer is a stabilizer having a heat stabilizing ability, and is, for example, a phosphorus compound such as JPP100 or JPP2000 available from Johoku Kagaku Kogyo.

### 3.3.4. Multi-functional stabilizer (c-4)

The multi-functional stabilizer is a stabilizer having, for example, both of an ultraviolet light absorbing function and an anti-oxidizing function. A preferred example thereof is a benzotriazolyl-alkylbisphenol compound represented by the following formula (F1): 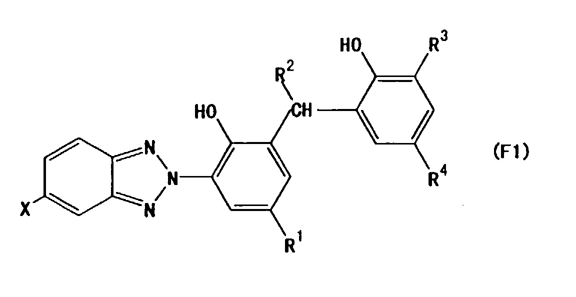 wherein X is a hydrogen atom, a halogen atom, an alkyl group, a cycloalkyl group, an alkoxy group or an alkylaryl group, R¹ is an alkyl group, a cycloalkyl group, an aryl group, an alkoxy group or an arylalkyl group, R² is a hydrogen atom, an alkyl group or an aryl group, R³ and R⁴ are each an alkyl group, a cycloalkyl group, an aryl group or an alkylaryl group, and R³ and R⁴ may be the same or different.

X, R¹, R², R³ and R⁴ are substituents which may be the same or different.

Of the compounds represented by the formula (F1), examples of the benzotriazolyl-alkylbisphenol compounds wherein X is a halogen atom include:
2-(5-chlorobenzotriazolyl)-4-t-butyl-6'-t-butyl-4'-methyl-2,2'-methylenebisphenol,
2-(5-chlorobenzotriazolyl)-4-t-butyl-6'-t-butyl-4'-butyl-2,2'-methylenebisphenol,
2-(5-chlorobenzotriazolyl)-4-t-butyl-4',6'-di-t-amyl-2,2'-methylenebisphenol, and
2-(5-chlorobenzotriazolyl)-4-t-butyl-4',6'-di-t-octyl-2,2'-methylenebisphenol.

Of these, compounds wherein, in the formula (F1), X and R² are each hydrogen and R¹, R³ and R⁴ are each an alkyl group of 1 to 8 carbon atoms (R¹, R³ and R⁴ may be the same or different) are preferable. That is, it is preferable to use a compound represented by the following formula (F3): 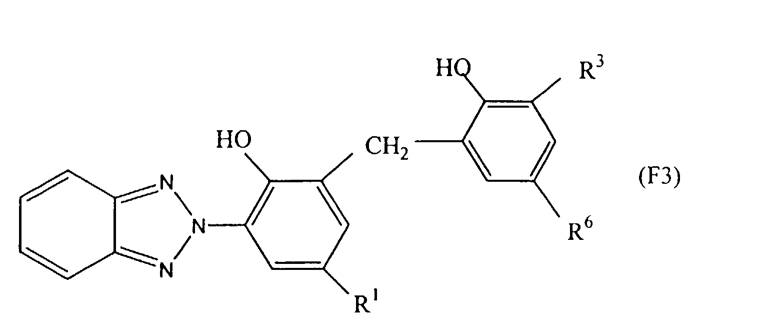 wherein R¹, R³ and R⁴ are each an alkyl group of 1 to 8 carbon atoms, and R¹, R³ and R⁴ may be the same or different.

Examples of such compounds include:
(1) 6-(2-benzotriazolyl)-4-t-butyl-6'-t-butyl-4'-methyl-2,2'-methylenebisphenol,
(2) 6-(2-benzotriazolyl)-4-t-butyl-6'-t-butyl-4'-t-butyl-2,2'-methylenebisphenol,
(3) 6-(2-benzotriazolyl)-4-t-butyl-4',6'-di-t-amyl-2,2'-methylenebisphenol,
(4) 6-(2-benzotriazolyl)-4-t-butyl-4',6'-di-t-octyl-2,2'-methylenebisphenol,
(5) 6-(2-benzotriazolyl)-4-t-octyl-6'-t-butyl-4'-methyl-2,2'-methylenebisphenol,
(6) 6-(2-benzotriazolyl)-4-t-octyl-4',6'-di-t-butyl-2,2'-methylenebisphenol,
(7) 6-(2-benzotriazolyl)-4-t-octyl-4',6'-di-t-amyl-2,2'-methylenebisphenol,
(8) 6-(2-benzotriazolyl)-4-t-octyl-4',6'-di-t-octyl-2,2'-methylenebisphenol,
(9) 6-(2-benzotriazolyl)-4-t-octyl-4',6'-di-t-octyl-4'-methyl-2,2'-methylenebisphenol,
(10) 6-(2-benzotriazolyl)-4-t-octyl-4',6'-di-t-amyl-4'-methyl-2,2'-methylenebisphenol,
(11) 6-(2-benzotriazolyl)-4-methyl-6'-t-butyl-4'-methyl-2,2'-methylenebisphenol,
(12) 6-(2-benzotriazolyl)-4-methyl-6'-t-amyl-4'-methyl-2,2'-methylenebisphenol,
(13) 6-(2-benzotriazolyl)-4-methyl-6'-t-octyl-4'-methyl-2,2'-methylenebisphenol,
(14) 6-(2-benzotriazolyl)-4-methyl-4',6'-di-t-butyl-2,2'-methylenebisphenol,
(15) 6-(2-benzotriazolyl)-4-methyl-4',6'-di-t-amyl-2,2'-methylenebisphenol, and
(16) 6-(2-benzotriazolyl)-4-methyl-4',6'-di-t-octyl-2,2'-methylenebisphenol.

Of these, 6-(2-benzotriazolyl)-4-t-octyl-6'-t-butyl-4'-methyl-2,2'-methylenebisphenol (e.g., JAST500 available from Johoku Kagaku Kogyo) is particularly preferable.

There is no specific limitation on the amount of the benzotriazolyl-alkylbisphenol compound added, and the compound is used in an amount of usually 0.01 to 5 % by weight, preferably 0.05 to 5 % by weight, based on the whole amount of the polyol component used for preparing the polyurethane resin or based on the amount of the polyurethane resin. By the use of such a polyol composition, the resulting polyurethane resin can be remarkably prevented from being colored or thermally deteriorated.

The benzotriazolyl-alkylbisphenol compound can be blended with the polyol component by arbitrary means such as merely mixing at a given temperature. It is particularly preferable to dilute the compound with mineral oil, paraffinic oil, vegetable oil or the like, prior to adding to the polyol, because the compatibility of the compound can be further improved.

The polyol composition containing the benzotriazolyl-alkylbisphenol compound is highly lipophilic and has good resistance to volatilization. The polyol composition and a polyurethane resin obtainable from the polyol composition can be effectively protected even when they are continuously exposed to the outside air or light over a long period of time

### 3.4. Catalyst (D)

In the preparation of the thermoset resin of the invention, it is preferable to use a catalyst (D), and the catalyst is an urethane-forming catalyst (d-1) or an isocyanurate-forming catalyst (d-2). Although these catalysts may be used singly or in combination, it is preferable to use them in combination in order to remarkably accelerate the curing reaction of the polyol component (A) with the isocyanate component (B).

The catalyst (D) is used in an amount of 0.5 to 3.0 parts by weight based on 100 parts by weight of the total of the compounds (a-1), (a-2) and (a-3) or based on 100 parts by weight of the total of the compounds (a-1-2), (a-2) and (a-3). When the catalyst is used in an amount of not less than 0.5 part by weight, the time of curing reaction of the polyol component with the isocyanate component may be prominently shortened, and when the catalyst is used in an amount of not more than 3.0 parts by weight, the heat resistance and the light resistance of the resulting polyurethane resin may be improved. Therefore, the above range is preferable.

### 3.4.1. Urethane-forming catalyst (d-1)

The urethane-forming catalyst is a Sn metal catalyst or a Bi metal catalyst. Examples of the Sn catalysts include tin acetate, tin octoate, tin oleate, tin laurate, stannous octoate, dibutyltin diacetate, dibutyltin dilaurate, dibutyltin dimercaptide, dibutyltin maleate, dimethyltin dilaurate and dioctyltin dimercaptide. An example of the Bi catalyst is bismuth neodecanoate. Of these, dimethyltin dilaurate and dibutyltin dilaurate are particularly preferable, because they accelerate the curing reaction of the polyol component with the isocyanate component.

### 3.4.2. Isocyanurate-forming catalyst (d-2)

Examples of the isocyanurate-forming catalysts include potassium acetate, potassium octylate, potassium phenolate, a non-amine type glycol, and a compound obtainable by partial alcoholate-forming dehydration of a non-amine type polyether polyol with a KOH aqueous solution.

Of these, potassium phenolate is preferable, because the curing reaction of the polyol component with the isocyanate component can be remarkably accelerated, and besides the heat resistance and the light resistance of the resulting polyurethane resin can be kept favorable.

### 3.5. Pigment (E)

The pigment is an additive to color the polyurethane resin. As the pigment, any of known inorganic or organic pigments is employable. Examples of the inorganic pigments include carbon black, titanium oxide, alumina, barium titanate, magnesium titanate, calcium titanate, strontium titanate, zinc oxide, siliceous sand, clay, mica, diatomaceous earth, chromium oxide, cerium oxide, red iron oxide, magnesium oxide, zirconium oxide, barium sulfate, barium carbonate, calcium carbonate, silica, silicon carbide, silicon nitride, boron carbide, tungsten carbide, titanium carbide and cerium oxide. Examples of the organic pigments include Naples Yellow, Naphthol Yellow S, Molybdenum Orange, Permanent Orange RK, Permanent Red 4R, Brilliant Carmine B, Fast Violet B, Methyl Violet Lake Phthalocyanine Blue, Fast Sky Blue, Pigment Green B and Malachite Green Lake, without limiting thereto. These pigments are powders and are difficult in handling, so that it is preferable to incorporate them into the polyether polyol. The pigment powder is used in an amount of 0.1 to 10.0 parts by weight based on 100 parts by weight of the total of the compounds (a-1), (a-2) and (a-3) or based on 100 parts by weight of the compounds (a-1-2), (a-2) and (a-3). When the amount thereof is not more than 10 parts by weight, the viscosity of the polyol component (A) can be lowered to thereby facilitate handling. Therefore, the above range is preferable.

### 3.6. Other additives

In addition, other additives, such as plasticizer, metal deactivator, lubricant, emulsifying agent, surface active agent, defoamer, filler, foaming agent, fluorescent sensitizer, flame retardant and antistatic agent, may be employed.

An embodiment wherein a stabilizer such as an ultraviolet light absorber, an antioxidant, a heat stabilizer or a multi-functional stabilizer, a catalyst such as an urethane-forming catalyst or an isocyanurate-forming catalyst, a pigment and other additives are previously added to the polyol component (A) is described above. In the present invention, however, addition of the additives is not always limited to this embodiment. For example, these additives may be added when the polyol component (A) is mixed with the organic polyisocyanate component (B), or they may be previously added to the organic polyisocyanate component (B), or they may be previously added to both of the polyol component (A) and the organic polyisocyanate component (B).

### 4. Organic polyisocyanate component (B)

Next, the organic polyisocyanate compound to be reacted with the polyol component in the preparation of the thermoset polyurethane resin of the invention is described.

As the organic polyisocyanate compound for use in the invention, a polyisocyanate compound having 2 or more isocyanate groups in a molecule and used for usual polyurethane resin compositions is employable.

Examples of such compounds include aromatic polyisocyanates, such as tolylene diisocyanate (TDI), hydrogenated tolylene diisocyanate, diphenylmethane diisocyanate (MDI), polymeric MDI (PMDI), xylylene diisocyanate (XDI), tetamethylxylylene diisocyanate (TMXDI) and 1,5-naphthalene diisocyanate (NDI); aliphatic polyisocyanates, such as hexamethylene diisocyanate (HDI); alicyclic polyisocyanates, such as isophorone diisocyanate (IPDI), hydrogenated XDI (H6XDI), hydrogenated MDI (H12MDI) and norbornane diisocyanate methyl (NBDI); carbodiimide modified polyisocyanates from the above isocyanates; and isocyanurate modified products. Of these, aliphatic polyisocyanates and alicyclic polyisocyanates having relatively mild reactivity are particularly preferable from the viewpoints of reactivity and improvements in heat resistance and light resistance of the resulting resin.

The polyisocyanate compounds may be used singly or may be used in combination of plural kinds when needed, but it is preferable to use them in combination.

In the combination use, preferable is a combination of a polycyclic aliphatic polyisocyanate and a polyfunctional compound obtainable from the polycyclic aliphatic polyisocyanate and having 3 or more isocyanate groups, preferably, having an isocyanurate sturucture. As for the mixing ratio, the polyfunctional compound is desirably added in an amount of 1 to 40 % by weight, preferably 10 to 35 % by weight, based on the whole amount of the polyisocyanate component (B).

Of the above compounds, a compound having a norbornane ring is preferably employed.

Particularly, a mixture of (b-1) a compound represented by the formula (F2) and a polyfunctional compound obtainable from the compound represented by the formula (F2) and having 3 or more isocyanate groups is preferably employed, and the mixing weight ratio (b-1)/(b-2) is in the range of 99/1 to 60/40, preferably 90/10 to 65/35. 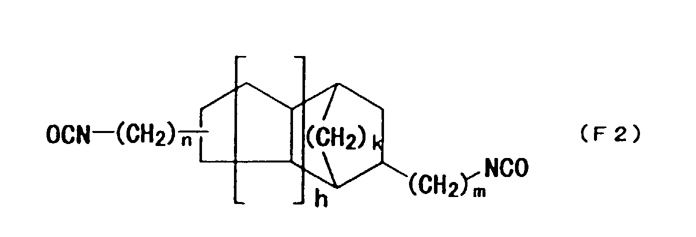 wherein K is an integer of 0 to 2, m and n are each an integer of 1 to 5, and h is an integer of 0 to 2, with the exception that h and k are both 0.

In the above formula, m and n may be the same or different.

### 4.1. Polycyclic aliphatic diisocyanate compound (b-1)

Examples of the compounds (b-1) represented by the formula (F2) include:
as those wherein k=0 and h=1,
3(4),7(8)-di(isocyanatomethyl) bicyclo [4,3,0^{1,6}] nonane,
3(4)-isocyanatomethyl-7(8)-isocyanatoethyl bicyclo [4,3,0^{1,6}] nonane,
3(4)-isocyanatoethyl-7(8)-isocyanatomethyl bicyclo [4,3,0^{1,6}] nonane,
3(4)-isocyanatomethyl-7 (8)-isocyanatopropyl bicyclo [4,3,0^{1,6}] nonane,
3(4)-isocyanatopropyl-7(8)-isocyanatomethyl bicyclo [4,3,0^{1,6}] nonane,
3(4)-isocyanatomethyl-7(8)-isocyanatobutyl bicyclo [4,3,0^{1,6}] nonane,
3(4)-isocyanatobutyl-7(8)-isocyanatomethyl bicyclo [4,3,0^{1,6}] nonane,
3(4)-isocyanatomethyl-7(8)-isocyanatopentyl bicyclo [4,3,0^{1,6}] nonane,
3(4)-isocyanatopentyl-7(8)-isocyanatomethyl bicyclo [4,3,0^{1,6}] nonane,
3(4), 7(8)-di(isocyanatoethyl) bicyclo [4,3,0^{1,6}] nonane,
3(4)-isocyanatoethyl-7(8)-isocyanatopropyl bicyclo [4,3,0^{1,6}] nonane,
3(4)-isocyanatopropyl-7(8)-isocyanatoethyl bicyclo [4,3,0^{1,6}] nonane,
3(4)-isocyanatoethyl-7(8)-isocyanatobutyl bicyclo [4,3,0^{1,6}] nonane,
3(4)-isocyanatobutyl-7(8)-isocyanatoethyl bicyclo [4,3,0^{1,6}] nonane,
3(4)-isocyanatoethyl-7(8)-isocyanatopentyl bicyclo [4,3,0^{1,6}] nonane, and
3(4)-isocyanatopentyl-7(8)-isocyanatoethyl bicyclo [4,3,0^{1,6}] nonane;
as those wherein k=2 and h=0,
2,5(6)-di(isocyanatomethyl) bicyclo[2,2,2] octane,
2-isocyanatomethyl-5(6)-isocyanatoethyl bicyclo [2,2,2] octane,
2-isocyanatomethyl-5(6)-isocyanatopropyl bicyclo [2,2,2] octane,
2-isocyanatomethyl-5(6)-isocyanatobutyl bicyclo [2,2,2] octane,
2-isocyanatomethyl-5(6)-isocyanatopentyl bicyclo [2,2,2] octane,
2,5(6)-di(isocyanatoethyl) bicyclo [2,2,2] octane,
2-isocyanatoethyl-5(6)-isocyanatopropyl bicyclo [2,2,2] octane,
2-isocyanatoethyl-5(6)-isocyanatobutyl bicyclo [2,2,2] octane, and
2-isocyanatoethyl-5(6)-isocyanatopentyl bicyclo [2,2,2] octane; and
as those wherein k=1 and h=1,
3(4),8(9)-di(isocyanatomethyl) tricyclo [5,2, 1,0^{2,6}] decane,
3(4)-isocyanatomethyl-8(9)-isocyanatoethyl tricyclo [5,2,1,0^{2,6}] decane,
3(4)-isocyanatomethyl-8(9)-isocyanatopropyl tricyclo [5,2,1,0^{2,6}] decane,
3(4)-isocyanatomethyl-8(9)-isocyanatobutyl tricyclo [5,2,1,0^{2,6}] decane,
3(4)-isocyanatomethyl-8(9)-isocyanatopentyl tricyclo [5,2,1,0^{2,6}] decane,
3(4),8(9)-di(isocyanatoethyl) tricyclo [5,2,1,0^{2,6}] decane,
3(4)-isocyanatoethyl-8 (9)-isocyanatopropyl tricyclo [5,2,1,0^{2,6}] decane,
3(4)-isocyanatoethyl-8(9)-isocyanatobutyl tricyclo [5,2,1,0^{2,6}] decane, and
14)-isocyanatoethyl-8 (9)-isocyanatopentyl tricyclo [5,2,1,0^{2,6}] decane.

Particularly, a compound wherein k=1 and h=0 in the formula (F2) is preferable. That is, a compound having a norbornane ring and represented by the following formula (F4) is preferable. 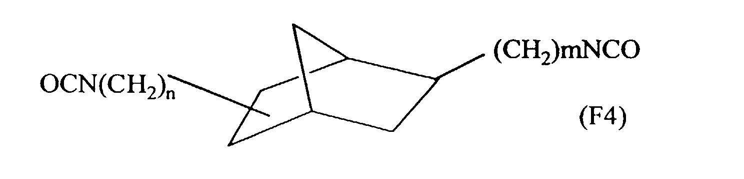 wherein m and n are each an integer of 1 to 5, and m and n may be the same or different.

Examples of the compounds wherein k=1 and h=0 include:
2,5(6)-di(isocyanatomethyl) bicyclo [2,2,1] heptane,
2-isocyanatomethyl-5(6)-isocyanatoethyl bicyclo [2,2,1] heptane,
2-isocyanatomethyl-5(6)-isocyanatopropyl bicyclo [2,2,1] heptane,
2-isocyanatomethyl-5(6)-isocyanatobutyl bicyclo [2,2,1] heptane,
2-isocyanatomethyl-5(6)-isocyanatopentyl bicyclo [2,2,1] heptane,
2,5(6)-di(isocyanatoethyl) bicyclo [2,2,1] heptane,
2-isocyanatoethyl-5(6)-isocyanatopropyl bicyclo [2,2,1] heptane,
2-isocyanatoethyl-5(6)-isocyanatobutyl bicyclo [2,2,1] heptane, and
2-isocyanatoethyl-5(6)-pentyl bicyclo [2,2,1] heptane.

Of the polycyclic aliphatic diisocyanates, 2,5-diisocyanatomethyl bicyclo [2,2,1] heptane, 2,6-diisocyanatomethyl bicyclo [2,2,1] heptane, a mixture thereof (abbreviated to NBDI hereinafter), or 3(4),8(9)-di(isocyanatomethyl) tricyclo [5,2,1,0^{2,6}] decane (abbreviated to TCDI hereinafter) is particularly preferable.

Specific examples of the above compounds include 2,5-diisocyanate-methyl-bicyclo (2,2,1) heptane, 2,6-diisocyanate-methyl-bicyclo (2,2,1) heptane and a mixture thereof (abbreviated to NBDI hereinafter), each of which has a NCO content of 40.7 %.

The polycyclic aliphatic diisocyanate compounds may be used singly or in combination of plural kinds, and as a matter of course, one or more kinds of other isocyanate compounds may be used in combination in amounts not detrimental to the effects of the present invention.

### 4.1.1. Process for preparing polycyclic aliphatic diisocyanate compound

There is no specific limitation on the process for preparing the polycyclic aliphatic diisocyanate compound, and for example, this compound can be prepared through successive reactions of hydroformylation from dimerized cyclopentadiene, preparation of a reducing amino compound and phosgene formation in accordance with a synthesis process of a compound of the formula (F2) wherein h=1, m=1, and k=1, said process being described in DE P 3,018,198.7, DE-OS 1,645,595 and DE-OS 2,819,980, or through phosgene formation reaction of the corresponding diamine in accordance with a synthesis process of a compound of the formula (F2) wherein h=0, m=1, and k=1, said process being described in U.S. Patent No. 3,143,570. The relevant description in DE P 3,018,198.7, DE-OS 1,645,595, DE-OS 2,819,980 and U.S. Patent No. 3,143,570 is incorporated in this specification by reference.

### 4.2. Polyfunctional compound (b-2)

The polyfunctional compound (b-2) is obtainable from a compound represented by the formula (F2) and has 3 or more isocyanate groups. Any of compounds obtainable by the reaction of a compound represented by the formula (F2) is employable, but preferable are those still having a norbornane ring or a tricyclo ring, and more preferable are those having an isocyanurate structure and an adduct structure.

The isocyanurate structure is a trimer of polyisocyanurate and has an isocyanurate ring (sometimes referred to as a "triazine ring").

When the polyfunctional compound (b-2) has the isocyanurate sturcture, the mixing weight ratio (b-1)/(b-2) is preferably in the range of 99/1 to 60/40, as previously described.

When the ratio of the isocyanurate (b-2) represented by the formula (F2) is not less than 1 % by weight, the reaction can be accelerated, and the heat resistance and the light resistance of the resulting polyurethane are improved. When the ratio thereof is not more than 40 % by mass (weight), the compatibility with the polyol component may become good, and thereby the curing reaction rate may be increased. Moreover, the elongation of the resulting polyurethane resin may become excellent, and the soft touch properties thereof may be improved.

The adduct sturcture is a modified product of an organic polyisocyanate with a polyhydric alcohol, and is usually obtained by conducting the reaction in such a manner that the NCO group/OH group molar ratio becomes not less than 2. The OH group of the polyhydric alcohol reacts with the NCO group to form an urethane bonding, and at least one of the NCO groups of the organic polyisocyanate molecule used in the reaction is unreacted and remains in the resulting modified product. Therefore, the adduct is usually differentiated from a prepolymer or a polyurethane resin.

There is no specific limitation on the polyhydric alcohol, and any of polyhydric alcohols used for polyurethane resins, such as trimethylolpropane, glycerol, sorbitol, sugar and pentaerythritol, are employable. Of these, preferable are those having 3 to 10 hydroxyl groups.

Also when the polyfunctional compound (b-2) is an adduct , the mixing weight ratio (b-1)/(b-2) is in the range of 99/1 to 60/40, as previously described. When the ratio of the adduct (b-2) represented by the formula (F2) is not less than 1 % by weight, the reaction can be accelerated, and the heat resistance and the light resistance of the resulting polyurethane are improved. When the ratio thereof is not more than 40 % by mass (weight), the compatibility with the polyol component becomes good, and thereby the curing reaction rate is increased. Moreover, the elongation of the resulting polyurethane resin can be maintained high, and the soft touch properties thereof are improved.

### 4.3. Urethane modified prepolymer

The organic polyisocyanate component (B) for use in the invention is more preferably a prepolymer obtained by partial urethane modification of the aforesaid mixed polyisocyanate (mixture of (b-1) and (b-2)) with a polyol component (Aₚᵣₑ).

By the use of the prepolymer obtained by partial urethane modification of the mixed polyisocyanate, the curing reaction rate can be increased and the soft touch properties are greatly improved.

### 4.3.1. Polyol component (Aₚᵣₑ)

There is no specific limitation on the polyol component (Aₚᵣₑ) used as a modifier for the urethane modification, and any polyol used for usual polyurethane resins is employable. Examples thereof include polyhydric alcohols, polyether polyols, polyester polyols and polymer polyols. Of these, polyether polyols and polyester polyols are preferable.

In a preferred embodiment, the polyol component (Aₚᵣₑ) is at least one compound selected from the group consisting of;
(a-5) a polyether polyol obtainable by addition polymerization of an active hydrogen compound with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

In a more preferred embodiment, the polyol component (Aₚᵣₑ) is at least one compound selected from the group consisting of;
(a-5-2) a polyether polyol obtainable by addition polymerization of a non-amine type polyhydric alcohol with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

The polyether polyol preferably used as a modifier has an average functional group number of 2 to 3 and a hydroxyl value of 24 to 120 mgKOH/g, as described above. When the average functional group number is less than 2 or when the hydroxyl value is less than 24 mgKOH/g, the effect of increasing a curing reaction rate may be not expressed and the hardness of the resulting polyurethane resin may become too low. On the other hand, when the average functional group number is more than 3 or when the hydroxyl value is more than 120 mgKOH/g, the soft touch properties of the polyurethane resin are not improved.

Each of the polyester diol and the polycarbonate diol preferably used as a modifier has a hydroxyl value of 55 to 120 mgKOH/g. When the hydroxyl value is not less than 55 mgKOH/g, the reaction rate may be increased, and when the hydroxyl value is not more than 120 mgKOH/g, the hardness of the polyurethane resin may be easily controlled so as to be in a given range. Therefore, the above range is preferable.

### 4.3.1.1. Polyether polyol (a-5)

The polyether polyol (a-5) for use in the invention is a polyether polyol obtainable by addition polymerization of an active hydrogen compound with an alkylene oxide and having an average functional group number of 2 to 3 and a hydroxyl value of 24 to 120 mgKOH/g.

The active hydrogen compound and the alkylene oxide compound used in the preparation of the polyether polyol (a-5) can be selected from the groups of compounds used for preparing the compound (a-1), which are previously described in the sections 3.2.1.1 and 3.2.1.2. The active hydrogen compound and the alkylene oxide compound used herein may be the same as or different from those used for preparing the compound (a-1).

### 4.3.1.2. Polyether polyol (a-5-2)

The polyether polyol (a-5-2) that is preferably used in the invention is a polyether polyol obtainable by addition polymerization of a non-amine type polyhydric alcohol with an alkylene oxide and having an average functional group number of 2 to 3 and a hydroxyl value of 24 to 120 mgKOH/g.

The polyhydric alcohol and the alkylene oxide compound used in the preparation of the polyether polyol (a-5-2) can be selected from the groups of compounds used for preparing the compound (a-1-2), which are previously described in the section 3.2.1.3. The polyhydric alcohol and the alkylene oxide compound used herein may be the same as or different from those used for preparing the compound (a-1-2).

### 4.3.1.3. Polyester diol (a-6)

The polyester diol (a-6) for use in the invention is a polyester diol having a hydroxyl value of 55 to 120 mgKOH/g and is a dehydro-condensate of a non-amine type glycol and a dicarboxylic acid.

The non-amine type glycol and the dicarboxylic acid used in the preparation of the polyester diol (a-6) can be selected from the groups of compounds used for preparing the compound (a-2), which are previously described in the section 3.2.2. The non-amine type glycol and the dicarboxylic acid used herein may be the same as or different from those used for preparing the compound (a-2).

### 4.3.1.4. Polycarbonate diol (a-7)

The polycarbonate diol (a-7) for use in the invention is a polycarbonate diol having a hydroxyl value of 55 to 120 mgKOH/g and is obtainable by ester interchange reaction of a non-amine type glycol with dimethyl carbonate.

The non-amine type glycol used in the preparation of the polycarbonate diol (a-7) can be selected from the group of compounds used for preparing the compound (a-3), which are previously described in the section 3.2.3. The non-amine type glycol used herein may be the same as or different from the compound used for preparing the compound (a-3).

### 4.3.2. Preparation of prepolymer

As the modifier for the urethane modification, the polyether polyol may be used singly or in combination with the polyester diol or the polycarbonate diol, or the polyester diol and the polycarbonate diol may be each used singly.

In the most preferred embodiment of the modifier, the polyether polyol and the polyester diol or the polycarbonate diol are used in a weight ratio of 95/5 to 50/50, and thereby not only the curing reaction rate and the soft touch properties but also the elongation of the polyurethane resin may be greatly improved.

In the prepolymer obtainable by partial urethane modification of the mixed polyisocyanate (mixture of (b-1) and (b-2)) with the polyol component (Aₚᵣₑ), the NCO content is preferably in the range of 20 to 30 % by mass (weight). When the NCO content is not less than 20 % by mass (weight), the prepolymer has a low viscosity and handling of the prepolymer can be improved. When the NCO content is not more than 30 % by mass (weight), not only the curing reaction rate and the soft touch properties but also the elongation of the polyurethane resin may be greatly improved. Therefore, the above range is preferable.

In the preparation of the urethane prepolymer, other aliphatic or alicyclic diisocyanates, such as hexamethylene diisocyanate (HDI), isophorone diisocyanate (IPDI), hydrogenated xlylene diisocyanate, 4,4'-dicylohexyl-methane-diisocyanate, 1,8-diisocyanate-4-isocyanate methyl octane, 1,3,6-hexamethylene triisocyanate and bicycloheptane triisocyanate, may be used in combination in amounts not detrimental to the objects of the invention. Further, a polyisocyanate may be used in combination, and an isocyanurate , an adduct , a buret , an allophanate , a carbodiimide or the like may be used.

### 5. Blending of polyol component (A) with organic polyisocyanate component (B)

As previously described in the section 2, the thermoset polyurethane resin of the invention can be prepared by subjecting the polyol component (A) to reaction with the organic polyisocyanate component (B) in such a manner that the resulting polyurethane resin can have the properties (i) to (iv), preferably properties (v) to (vii), particularly preferably properties (viii) to (x). In the reaction, these components are used in such amounts that the NCO/OH molar ratio in the polyol component (A) and the organic polyisocyanate component (B) becomes 0.80 to 1.20. When the NCO/OH molar ratio is less than 0.80, the initial property values of the polyurethane resin become too low. On the other hand, when the NCO/OH molar ratio is more than 1.20, the surface hardness of the resulting polyurethane resin becomes too high. The NCO/OH molar ratio is most preferably in the range of 0.95 to 1.05.

### 6. Use of thermoset polyurethane resin and composite thereof

The thermoset polyurethane resin of the invention is excellent not only in appearance but also in heat resistance, light resistance, scratch resistance and soft touch properties. Further, differently from a vinyl chloride resin having been heretofore widely used as a skin material, the thermoset polyurethane resin has excellent adhesiveness to polyurethane foam pad and generates no harmful substance such as dioxin in the incineration disposal. Therefore, the thermoset polyurethane resin is favorably used as a skin material for skin layers of, for example, interior decorative articles of transportation means such as vehicles, ships and aircrafts, building interior articles of shops, offices and other buildings, and general or office furniture, especially, for skin layers of various automobile interior decorative articles such as automobile instrument panels, though the uses thereof are not limited thereto.

In the use as a skin material, the thickness of a sheet of the thermoset polyurethane resin is in the range of, for example, 0.3 to 3.0 mm, preferably about 0.5 to 2.0 mm, though the thickness is not specifically limited.

The present invention also relates to a composite having a sheet of the thermoset polyurethane resin and a foam and/or a core. In this composite, a layer of the thermoset polyurethane resin sheet is usually positioned on the outermost side as a surface layer, i.e., a skin, because of its properties, and the foam and/or the core positioned inside the skin makes up for other properties required for the composite.

In the composite, the thermoset polyurethane resin sheet is preferably a sheet having a thickness of, for example, 0.3 to 3.0 mm, preferably 0.5 to 2.0 mm, and is, for example, a spray skin obtained by spraying.

There is no specific limitation on the foam material, but from the viewpoints of good adhesion to the thermoset polyurethane resin sheet and easy recycling, the foam is preferably a polyurethane foam. The foam may be a rigid foam, a semirigid foam or a flexible foam depending on the properties desired for the composite, and the thickness of the foam is appropriately selected.

There is no specific limitation also on the core material, and any material can be used if it can impart rigidity, strength, elasticity, etc. desired for the composite. Examples of the core materials include resins and elastomers, such as ABS resins, styrene resins olefin resins and acrylic resins, and metal plates, such as aluminum plates and steel plates, without limiting thereto. The thickness of the core is appropriately selected according to the properties desired for the composite.

There is no specific limitation also on the method to bond the layers of the composite. For example, the layers can be bonded by means of various adhesives, heat sealing, etc., but it is preferable to place the polyurethane skin or the polyurethane skin and the core in a mold, followed by integral expansion molding. For the integral expansion molding, any of known methods is employable.

### 7. Urethane prepolymer

There is also provided by the present invention an urethane prepolymer obtained from a polyol component (Aₚᵣₑ) and an organic polyisocyanate component (B), wherein the organic polyisocyanate component (B) is a mixture of:
(b-1) a compound represented by the following formula (F2): 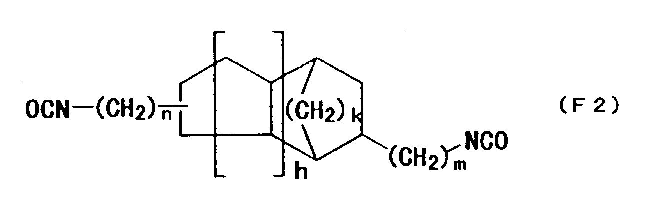 wherein K is an integer of 0 to 2, m and n are each an integer of 1 to 5, and h is an integer of 0 to 2, with the exception that h and k are both 0, and
(b-2) a polyfunctional compound obtainable from a compound represented by the formula (F2) and having 3 or more isocyanate groups, and
the mixing weight ratio (b-1)/(b-2) is in the range of 99/1 to 60/40.

As previously described, the prepolymer that is preferably used as the organic polyisocyanate component in the preparation of the thermoset polyurethane resin of the invention has excellent properties as such, and is preferably used for preparing a polyurethane resin showing excellent heat resistance and light resistance over a long period of time.

In the urethane prepolymer of the invention, the compound represented by the formula (F2), which is used in the compounds (b-1) and (b-2), is preferably a compound represented by the following formula (F4) that is a compound wherein h=0 and k=1 in the formula (F2).

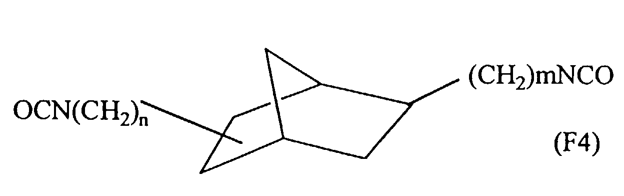

In a preferred embodiment, the component (b-2) has an isocyanurate structure.

In a preferred embodiment of the urethane prepolymer of the invention, further, the polyol component (Aₚᵣₑ) is at least one compound selected from the group consisting of
(a-5) a polyether polyol obtainable by addition polymerization of an active hydrogen compound with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

The polyol component (Aₚᵣₑ) is more preferably at least one compound selected from the group consisting of:
(a-5-2) a polyether polyol obtainable by addition polymerization of a non-amine type polyhydric alcohol with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

Details of the compound (b-1) represented by the formula (F1) used for preparing the prepolymer of the invention are the same as those described in the section 4.1 and its subsection 4.1.1, and details of the polyfunctional compound (b-2) are the same as those described in the section 4.2, so that description of them is omitted in this section. Further, details of the polyol component (Aₚᵣₑ) used as a modifier for the mixture of the compounds (b-1) and (b-2) and details of its partially urethane modified prepolymer are the same as those described in the section 4.3 and its subsections, so that description of them is omitted in this section.

By the reaction of the prepolymer of the invention with a further polyol component (A), a thermoset polyurethane resin excellent not only in basic properties such as elongation and hardness but also in long-term heat resistance and long-term light resistance can be obtained. The polyurethane resin obtainable by the use of the prepolymer of the invention is favorably used for coatings, adhesives, binders, elastomers, foams, sealants and the like.

There is no specific limitation on another polyol component (A) that is used in combination with the prepolymer of the invention to obtain a thermoset polyurethane resin, and any polyol component is employable. Preferred examples of the polyol components (A) include those previously described in detail in the section 3 and its subsections.

In the reaction of the prepolymer with the polyol component (A), an ultraviolet light absorber, an antioxidant, a heat stabilizer, an urethane-forming catalyst, an isocyanurate-forming catalyst, a pigment, a plasticizer, a flame retardant and other additives can be allowed to be present when needed. Preferred examples of the additives and addition conditions include those previously described in detail in the section 3 and its subsections.

In the reaction of the prepolymer of the invention with the polyol component (A), another isocyanate component can be used in combination.

The isocyanate employable in combination is, for example, a polyisocyanate used for usual polyurethane resin compositions and having 2 or more isocyanate groups in a molecule.

Examples of the polyisocyanates include aromatic polyisocyanates, such as tolylene diisocyanate (TDI), hydrogenated tolylene diisocyanate, diphenylmethane diisocyanate (MDI), polymeric MDI (PMDI), xylylene diisocyanate (XDI), tetamethylxylylene diisocyanate (TMXDI) and 1,5-naphthalene diisocyanate (NDI); aliphatic polyisocyanates, such as hexamethylene diisocyanate (HDI); alicyclic polyisocyanates, such as isophorone diisocyanate (IPDI), hydrogenated XDI (H6XDI) and hydrogenated MDI (H12MDI); carbodiimide modified polyisocyanates from the above isocyanates; and isocyanurate modified products. Of these, aliphatic polyisocyanates and alicyclic polyisocyanates are particularly preferable from the viewpoints of long-term heat resistance and long-term light resistance of the resulting resin. These polyisocyanates may be used in combination of two or more kinds. Of these, preferable are alicyclic organic polyisocyanates, and particularly preferable are polycyclic aliphatic polyisocyanates. As the polycyclic aliphatic polyisocyanates, compounds having a skeleton of 2 to 4 rings and 7 to 14 carbon atoms are preferable. They may be used singly, or may be used in combination of two or more kinds when needed.

### 8. Polyol composition

There is also provided by the present invention a polyol composition comprising a polyol component (A) and a benzotriazolyl-alkylbisphenol compound represented by the following formula (F1): 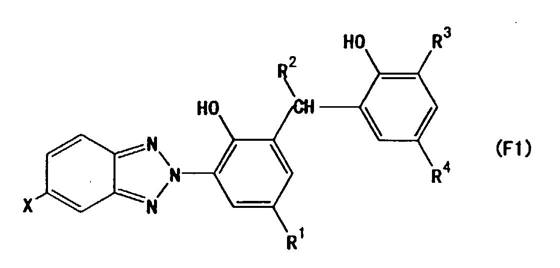 wherein X is a hydrogen atom, a halogen atom, an alkyl group, a cycloalkyl group, an alkoxy group or an alkylaryl group, R¹ is an alkyl group, a cycloalkyl group, an aryl group, an alkoxy group or an arylalkyl group, R² is a hydrogen atom, an alkyl group or an aryl group, R³ and R⁴ are each an alkyl group, a cycloalkyl group, an aryl group or an alkylaryl group, and R³ and R⁴ may be the same or different.

By the use of the polyol composition of the invention comprising the polyol component and the benzotriazolyl-alkylbisphenol compound, the resulting polyurethane resin may be remarkably prevented from being colored or thermally deteriorated, as previously described in the section 3.3.4.

There is no specific limitation on the content of the benzotriazolyl-alkylbisphenol compound in the polyol composition of the invention, but the compound is used in an amount of usually 0.01 to 5 % by weight, preferably 0.05 to 5 % by weight, based on the whole amount of the polyol component used for preparing the polyurethane resin or based on the amount of the polyurethane resin.

In the polyol composition of the invention, the benzotriazolyl-alkylbisphenol compound is preferably a compound wherein, in the formula (F1), R² is hydrogen, and R¹, R³ and R⁴ are each an alkyl group of 1 to 8 carbon atoms (R¹, R³ and R⁴ may be the same or different).

In a preferred embodiment of the polyol composition of the invention, the benzotriazolyl-alkylbisphenol compound is 6-(2-benzotriazolyl)-4-t-octyl-6'-t-butyl-4'-methyl-2,2'-methylenebisphenol.

As described in the section 3.3.4, the benzotriazolyl-alkylbisphenol compound can be blended with the polyol component by arbitrary means such as merely mixing at a given temperature. It is particularly preferable to dilute the compound with mineral oil, paraffinic oil, vegetable oil or the like, prior to adding to the polyol, because the compatibility of the compound can be further improved. The polyol composition containing the benzotriazolyl-alkylbisphenol compound is highly lipophilic and has good resistance to volatilization. The polyol composition and a polyurethane resin obtainable from the polyol composition can be effectively protected even when they are continuously exposed to the outside air or light over a long period of time.

Details of the benzotriazolyl-alkylbisphenol compound represented by the formula (F1) are as previously described in the section 3.3.4.

There is no specific limitation on the polyol used for the polyol composition of the invention, and any polyol is employable. Preferred examples of the polyols include those previously described in detail in the section 3-1, the section 3-2 and their subsections.

In the polyol composition of the invention, additives such as stabilizers may be used. Particularly, an antioxidant, a light stabilizer or a mixture thereof is preferably added to the composition. Details of the stabilizers employable in combination are as previously described in the sections 3.3.1 to 3.3.3.

Further, additives other than the stabilizers, such as plasticizer, metal deactivator, lubricant, emulsifying agent, surface active agent, defoamer, filler, blowing agent, colorant, fluorescent sensitizer, flame retardant and antistatic agent, may be used.

To obtain a polyurethane resin using the polyol composition of the invention, the polyol composition is subjected to reaction with an organic polyisocyanate compound, in the presence of an ultraviolet light absorber, an antioxidant, a heat stabilizer, an urethane-forming catalyst, an isocyanurate-forming catalyst, a pigment, a plasticizer, a flame retardant and other additives, when needed.

There is no specific limitation on the organic polyisocyanate component to be reacted with the polyol composition, and a polyisocyanate used for usual polyurethane compositions and having 2 or more isocyanate groups in a molecule is employable.

Details of the polyisocyanate component used are the same as those previously described in the section 4 and its subsections. The catalyst, other additives, conditions such as blending ratio of the components, etc. are as described previously.

### EXAMPLE

The present invention is further described with reference to the following examples, but the following examples are given for the purpose of only facilitating comprehension of the invention, and the invention is in no way limited to those examples. The terms "part(s)" and "%" mean "part(s) by weight" and "% by mass", respectively, unless otherwise stated.

### Property measuring method

Properties of the polyurethane resins obtained in the following examples and comparative examples were evaluated by the following methods and criteria.

### Density, Shore A surface hardness, Flexural modulus, Elongation

The density, Shore A hardness, flexural modulus and elongation were measured in accordance with a vulcanized rubber test method JIS K 6301⁻¹⁹⁶⁹.

### Soft touch properties

A polyurethane skin was bent at 180° and immediately set free to measure a recovery time of the skin. When the recovery time was more than 10 seconds, the soft touch properties of the skin were evaluated as ×; when the recovery time was 5 to 10 seconds, the soft touch properties of the skin were evaluated as Δ; when the recovery time was less than 5 seconds, the soft touch properties of the skin were evaluated as O; and when the recovery time was less than 1 second, the soft touch properties of the skin were evaluated as ⓞ.

### Scratch resistance

A polyurethane skin surface was scratched with nail. When no nail mark was left, the scratch resistance of the skin was evaluated as O.

### Adhesiveness to polyurethane foam pad

Integral molding of a polyurethane skin and a polyurethane foam pad was carried out, and the adhesiveness of the polyurethane skin to the polyurethane foam pad was measured. When an area of 90 to 100 % of the skin was bonded to the foam pad, the adhesion properties of the skin were evaluated as O.

### Heat resistance

A polyurethane skin was exposed to an atmosphere of 100°C for 1000 hours. Then, whether the skin was melted or not was visually observed. When a melt mark was observed, the skin was evaluated as "observed", and when no melt mark was observed, the skin was evaluated as "none".

### Durability evaluation 1

A polyurethane skin was exposed to an atmosphere of 110°C for 200 hours. Separately, a polyurethane skin was exposed to an atmosphere of carbon arc fadeometer (FOM) BP of 83°C for 200 hours. Thereafter, the skins were each measured on degree of color change, ΔE value, by an automatic color difference meter Color Ace Model TC-1 (manufactured by Tokyo Denshoku). Further, a polyurethane skin was exposed to an atmosphere of 110°C for 1200 hours, and the elongation of the skin was measured in accordance with JIS K 6301⁻¹⁹⁶⁹.

### Durability evaluation 2

A polyurethane skin was exposed to an atmosphere of 110°C for 400 hours. Separately, a polyurethane skin was exposed to an atmosphere of carbon arc fadeometer (FOM) BP of 83°C for 400 hours. Thereafter, the skins were each measured on degree of color change, ΔE value, by an automatic color difference meter Color Ace Model TC-1. Further, a polyurethane skin was exposed to an atmosphere of 110°C for 2400 hours, and the elongation of the skin was measured in accordance with JIS K 6301⁻¹⁹⁶⁹.

### Starting materials

The starting materials used in the examples and the comparative examples are as follows.

### Polyether polyol a-1 used in experiment

TPG/2/28: polyether polyol obtained by addition polymerization of tripropylene glycol with propylene oxide/ethylene oxide (80/20 by weight) and having an average functional group number of 2 and a hydroxyl value of 28 mgKOH/g

GLy/3/24: polyether polyol obtained by addition polymerization of glycerol with propylene oxide/ethylene oxide (85/15 by weight) and having an average functional group number of 3 and a hydroxyl value of 24 mgKOH/g

GLy/3/34: polyether polyol obtained by addition polymerization of glycerol with propylene oxide/ethylene oxide (85/15 by weight) and having an average functional group number of 3 and a hydroxyl value of 34 mgKOH/g

GLy/3/55: polyether polyol obtained by addition polymerization of glycerol with propylene oxide/ethylene oxide (85/15 by weight) and having an average functional group number of 3 and a hydroxyl value of 55 mgKOH/g

GLy/3/168: polyether polyol obtained by addition polymerization of glycerol with propylene oxide/ethylene oxide (85/15 by weight) and having an average functional group number of 3 and a hydroxyl value of 168 mgKOH/g

PE/4/34: polyether polyol obtained by addition polymerization of pentaerythritol with propylene oxide/ethylene oxide (85/15 by weight) and having an average functional group number of 4 and a hydroxyl value of 34 mgKOH/g

Sor/6/34: polyether polyol obtained by addition polymerization of sorbitol with propylene oxide/ethylene oxide (85/15 by weight) and having an average functional group number of 6 and a hydroxyl value of 34 mgKOH/g

TEA/3/34: polyether polyol obtained by addition polymerization of triethanolamine with propylene oxide/ethylene oxide (85/15 by weight) and having an average functional group number of 3 and a hydroxyl value of 34 mgKOH/g

### Polyester diol a-2 used in experiment

1,4BD/AA/55: polyester diol obtained by dehydropolycondensation of 1,4-butanediol with adipic acid and having a hydroxyl value of 55 mgKOH/g

NPG/AA/55: polyester diol obtained by dehydropolycondensation of neopentyl glycol with adipic acid and having a hydroxyl value of 55 mgKOH/g

1,4BD/AA/112: polyester diol obtained by dehydropolycondensation of 1,4-butanediol with adipic acid and having a hydroxyl value of 112 mgKOH/g

1,4BD/AA/160: polyester diol obtained by dehydropolycondensation of 1,4-butanediol with adipic acid and having a hydroxyl value of 160 mgKOH/g

### Polycarbonate diol a-3 used in experiment

1,6HD/DMC/55: polycarbonate diol obtained by ester interchange reaction of 1,6-hexanediol with dimethyl carbonate and having a hydroxyl value of 55 mgKOH/g

1,4BD/DMC/112: polycarbonate diol obtained by ester interchange reaction of 1,4-butanediol with dimethyl carbonate and having a hydroxyl value of 112 mgKOH/g

1,4BD/DMC/112: polycarbonate diol obtained by ester interchange reaction of 1,4-butanediol with dimethyl carbonate and having a hydroxyl value of 160 mgKOH/g

### Glycol a-4 used in experiment

EG(1810): ethylene glycol having a hydroxyl value of 1810 mgKOH/g

1,4BD(1247): 1,4-butanediol having a hydroxyl value of 1247 mgKOH/g

1,3BD(1247): 1,3-butanediol having a hydroxyl value of 1247 mgKOH/g

1,6HD(951): 1,6-hexanediol having a hydroxyl value of 951 mgKOH/g

### Ultraviolet light absorber c-1 used in experiment

T-770: TINUVIN 770 available from Ciba-Geigy

### Antioxidant c-2 used in experiment

I-1035: IRGANOX 1035 available from Ciba-Geigy

### Multi-function stabilizer c-4 used in experiment

JAST-500: available from Johoku Kagaku Kogyo

### Urethane-forming catalyst d-1 used in experiment

DBTDL: dibutyltin dilaurate

DMTDL: dimethyltin dilaurate

### Nurate-forming catalyst d-2 used in experiment

K-ph: potassium phenolate

### Pigment E used in experiment

CB: carbon black

TiO₂: titanium oxide powder

### Organic polyisocyanate B used in experiment

N(100/0/40.7): NBDI; NCO content: 40.7 %

N(70/30/33.8): isocyanate having a NBDI/NBDI isocyanurate mixing weight ratio of 70/30; NCO content: 33.8 %

N(99/1/40.4): isocyanate having a NBDI/NBDI isocyanurate mixing weight ratio of 99/1; NCO content: 40.4 %

N(55/45/30.3): isocyanate having a NBDI/NBDI isocyanurate mixing weight ratio of 55/45; NCO content: 30.3 %

NP(3/34/26): prepolymer obtained by partial urethane modification of isocyanate having a NBDI/NBDI isocyanurate mixing weight ratio of 70/30 with polyether polyol having an average functional group number of 3 and a hydroxyl value of 34 mgKOH/g; NCO content: 26 %

This prepolymer was prepared by a process comprising adding 700 g of NBDI and 300 g of a NBDI isocyanurate in a 2-liter three-necked flask, starting stirring, adding 266 g of a polyether polyol having an average functional group number of 3 and a hydroxyl value of 34 mgKOH/g, reacting them at 80°C for 3 hours, cooling the reaction solution to 25°C and discharging the solution.

NP(2/28/26): prepolymer obtained by partial urethane modification of isocyanate having a NBDI/NBDI isocyanurate mixing weight ratio of 70/30 with polyether polyol having an average functional group number of 2 and a hydroxyl value of 28 mgKOH/g; NCO content: 26 %

This prepolymer was prepared by a process comprising adding 700 g of NBDI and 300 g of a NBDI isocyanurate in a 2-liter three-necked flask, starting stirring, adding 270 g of a polyether polyol having an average functional group number of 2 and a hydroxyl value of 28 mgKOH/g, reacting them at 80°C for 3 hours, cooling the reaction solution to 25°C and discharging the solution.

NPE(3,2/34,55/26): prepolymer obtained by partial urethane modification of isocyanate having a NBDI/NBDI isocyanurate mixing weight ratio of 70/30 with polyether polyol having an average functional group number of 3 and a hydroxyl value of 34 mgKOH/g and with polyester diol having a hydroxyl value of 55 mgKOH/g (polyether polyol/polyester diol mixing weight ratio: 50/50); NCO content: 26 %

This prepolymer was prepared by a process comprising adding 700 g of NBDI and 300 g of a NBDI isocyanurate in a 2-liter three-necked flask, starting stirring, adding 129.5 g of a polyether polyol having an average functional group number of 3 and a hydroxyl value of 34 mgKOH/g and 129.5 g of a polyester diol having a hydroxyl value of 55 mgKOH/g, reacting them at 80°C for 3 hours, cooling the reaction solution to 25°C and discharging the solution.

NPC(3,2/34,55/26): prepolymer obtained by partial urethane modification of isocyanate having a NBDI/NBDI isocyanurate compound mixing weight ratio of 70/30 with polyether polyol having an average functional group number of 3 and a hydroxyl value of 34 mgKOH/g and with polycarbonate diol having a hydroxyl value of 55 mgKOH/g (polyether polyol/polycarbonate diol mixing weight ratio: 50/50); NCO content: 26 %

This prepolymer was prepared by a process comprising adding 700 g of NBDI and 300 g of a NBDI isocyanurate in a 2-liter three-necked flask, starting stirring, adding 129.5 g of a polyether polyol having an average functional group number of 3 and a hydroxyl value of 34 mgKOH/g and 129.5 g of a polycarbonate diol having a hydroxyl value of 55 mgKOH/g, reacting them at 80°C for 3 hours, cooling the reaction solution to 25°C and discharging the solution.

NPE(2/55/26): prepolymer obtained by partial urethane modification of isocyanate having a NBDI/NBDI isocyanurate mixing weight ratio of 70/30 with polyester diol having a hydroxyl value of 55 mgKOH/g; NCO content: 26 %

This prepolymer was prepared by a process comprising adding 700 g of NBDI and 300 g of a NBDI isocyanurate in a 2-liter three-necked flask, starting stirring, adding 258 g of a polyester diol having a hydroxyl value of 55 mgKOH/g, reacting them at 80°C for 3 hours, cooling the reaction solution to 25°C and discharging the solution.

NPC(2/55/26): prepolymer obtained by partial urethane modification of isocyanate having a NBDI/NBDI isocyanurate mixing weight ratio of 70/30 with polycarbonate diol having a hydroxyl value of 55 mgKOH/g; NCO content: 26 %

This prepolymer was prepared by a process comprising adding 700 g of NBDI and 300 g of a NBDI isocyanurate in a 2-liter three-necked flask, starting stirring, adding 252 g of a polycarbonate diol having a hydroxyl value of 55 mgKOH/g, reacting them at 80°C for 3 hours, cooling the reaction solution to 25°C and discharging the solution.

NPC(2/112/26): prepolymer obtained by partial urethane modification of isocyanate having a NBDI/NBDI isocyanurate mixing weight ratio of 70/30 with polycarbonate diol having a hydroxyl value of 112 mgKOH/g; NCO content: 26 %

This prepolymer was prepared by a process comprising adding 700 g of NBDI and 300 g of a NBDI isocyanurate in a 2-liter three-necked flask, starting stirring, adding 226 g of a polycarbonate diol having a hydroxyl value of 112 mgKOH/g, reacting them at 80°C for 3 hours, cooling the reaction solution to 25°C and discharging the solution.

TP(3/34/26): prepolymer obtained by partial urethane modification of isocyanate having a TCDI/TCDI isocyanurate mixing weight ratio of 70/30 with polyether polyol having an average functional group number of 3 and a hydroxyl value of 34 mgKOH/g; NCO content: 26 %

This prepolymer was prepared by a process comprising adding 700 g of TCDI and 300 g of a TCDI isocyanurate in a 2-liter three-necked flask, starting stirring, adding 89 g of a polyether polyol having an average functional group number of 3 and a hydroxyl value of 34 mgKOH/g, reacting them at 80°C for 3 hours, cooling the reaction solution to 25°C and discharging the solution.

TPE(2/55/26): prepolymer obtained by partial urethane modification of isocyanate having a TCDI/TCDI isocyanurate mixing weight ratio of 70/30 with polyester diol having a hydroxyl value of 55 mgKOH/g; NCO content: 26 %

This prepolymer was prepared by a process comprising adding 700 g of TCDI and 300 g of a TCDI isocyanurate compound in a 2-liter three-necked flask, starting stirring, adding 85 g of a polyester diol having a hydroxyl value of 55 mgKOH/g, reacting them at 80°C for 3 hours, cooling the reaction solution to 25°C and discharging the solution.

TPC(2/112/26): prepolymer obtained by partial urethane modification of isocyanate having a TCDI/TCDI isocyanurate mixing weight ratio of 70/30 with polycarbonate diol having a hydroxyl value of 112 mgKOH/g; NCO content: 26 %

This prepolymer was prepared by a process comprising adding 700 g of TCDI and 300 g of a TCDI isocyanurate in a 2-liter three-necked flask, starting stirring, adding 74 g of a polycarbonate diol having a hydroxyl value of 112 mgKOH/g, reacting them at 80°C for 3 hours, cooling the reaction solution to 25°C and discharging the solution.

### Comparative Example 1

### (1) Preparation of polyol component

100 Parts by weight of Sor/6/34 as a polyether polyol a-1 having a water content of not more than 0.05 % by mass, 1 part by weight of T-770 as a powdery ultraviolet light absorber c-1, 1 part by weight of I-1035 as an antioxidant c-2, 1.5 parts by weight of CB as a powdery pigment E, 1.5 parts by weight of TiO₂ as a powdery pigment E, 30 parts by weight of 1,4BD(1247) as a glycol a-4 having a water content of not more than 0.05 % by mass, 1 part by weight of DMTDL as an urethane-forming catalyst d-1 having a water content of not more than 0.05 % by mass and 0.3 part by weight of powdery K-ph as a nurate-forming catalyst having a water content of not more than 0.05 % by mass were stirred at 100°C and atmospheric pressure for 2 hours to give a homogeneous solution. The temperature of the mixed solution was lowered to 40°C, and the solution was subjected to vacuum deaeration for 1 hour to prepare a polyol component wherein water and bubbles were scarcely contained and powders were completely dissolved.

### (2) Molding of polyurethane resin and property measurements of polyurethane resin

Molding was carried out by a spray technique using Isotelum PSM70 and a spray gun of SP300. In detail, the polyol component prepared above and NP(3/34/26) as a polyisocyanate B were placed in a polyol tank and an isocyanate tank, respectively. In the spraying process, the temperatures of the polyol component and the isocyanate component were adjusted to 50 to 70°C, and the pressure given by collision of the both liquids was adjusted to 9 to 15 MPa. Then, an aluminum test mold (mold temperature: 60-70°C) arranged perpendicularly to the spray gun was previously coated with a release agent B-308-10 available from Chukyo Yushi, and the mold was so sprayed as to form a polyurethane skin having a thickness of 1 mm.

The polyurethane skin was removed from the mold. Next day, a sample was prepared from the skin, and the sample was subjected to measurements of initial properties and durability.

The results are set forth in Table 6.

### Comparative Examples 2-9

The procedure of Comparative Example 1 was repeated, except that blending of the starting materials was changed as shown in Table 1. The results are set forth in Table 6.

### Examples 1-39

The procedure of Comparative Example 1 was repeated, except that blending of the starting materials was changed as shown in Tables 2 to 5. The results are set forth in Tables 6 to 10.

**Table 1**

| | Com. Ex.1 | Com. Ex.2 | Com. Ex.3 | Com. Ex.4 | Com Ex.5 | Com Ex.6 | Com. Ex.7 | Com. Ex.8 | Com. Ex.9 |
|---|---|---|---|---|---|---|---|---|---|
| Polyether polyol a-1 | | | | | | | | | |
| Sor/6/34 | 100 | | | | | | | | |
| GLy/3/34 | | | 70 | 70 | 100 | 100 | 100 | 100 | 100 |
| GLy/3/168 | | 100 | | | | | | | |
| Polyester diol a-2 | | | | | | | | | |
| 1,4BD/AA/160 | | | 30 | | | | | | |
| Polycarbonate diol a-3 | | | | | | | | | |
| 1,6HD/DMC/160 | | | | 30 | | | | | |
| Glycol a-4 | | | | | | | | | |
| 1,4BD(1427) | 30 | 30 | 30 | 30 | | 7 | 45 | 30 | 30 |
| 1,6HD(951) | | | | | 30 | | | | |
| Ultraviolet light absorber c-1 | | | | | | | | | |
| T-770 | 1 | 1 | 1 | 1 | 1 | 1 | 1 | 1 | 1 |
| Antioxidant c-2 | | | | | | | | | |
| I-1035 | 1 | 1 | 1 | 1 | 1 | 1 | 1 | 1 | 1 |
| Urethane-forming catalyst d -1 | | | | | | | | | |
| DMTDL | 1 | 1 | 1 | 1 | 1 | 1 | 1 | 1 | 1 |
| Nurate-forming catalyst d -2 | | | | | | | | | |
| K-ph 0.3 | | 0.3 | 0.3 | 0.3 | 0.3 | 0.3 | 0.3 | 0.3 | 0.3 |
| Pigment E | | | | | | | | | |
| CB | 1.5 | 1.5 | 1.5 | 1.5 | 1.5 | 1.5 | 1.5 | 1.5 | 1.5 |
| TiO2 | 1.5 | 1.5 | 1.5 | 1.5 | 1.5 | 1.5 | 1.5 | 1.5 | 1.5 |
| Polyisocyanate B | | | | | | | | | |
| N100/0/40.7 | | | | | | | | 75.1 | |
| N55/45/30.3 | | | | | | | | | 100.8 |
| NP(3/34/26) | 117.5 | 156.1 | 128.4 | 128.4 | 91.9 | 34.9 | 171.4 | | |
| NCO/OH | 100 | 100 | 100 | 100 | 100 | 100 | 100 | 100 | 100 |

**Table 2**

| | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|
| Polyether polyol a-1 | | | | | | | | | | |
| TPG/2/28 | 100 | | | | | | 25 | | | |
| GLy/3/24 | | 100 | | | | | | | | |
| GLy/3/34 | | | 100 | | | | 75 | 70 | 70 | 70 |
| GLy/3/55 | | | | 100 | | | | | | |
| PE/4/34 | | | | | 100 | | | | | |
| TEA/3/34 | | | | | | 100 | | | | |
| Polyester diol a-2 | | | | | | | | | | |
| 1,4BD/AA/55 | | | | | | | | 30 | | |
| 1,4BD/AA/112 | | | | | | | | | | 30 |
| 1,4BD/AA/160 | | | | | | | | | | |
| NPG/AA/55 | | | | | | | | | 30 | |
| Glycol a-4 | | | | | | | | | | |
| 1,4BD(1427) | 30 | 30 | 30 | 30 | 30 | 30 | 30 | 30 | 30 | 30 |
| Ultraviolet light absorber c-1 | | | | | | | | | | |
| T-770 | 1 | 1 | 1 | 1 | 1 | 1 | 1 | 1 | 1 | 1 |
| Antioxidant c-2 | | | | | | | | | | |
| I-1035 | 1 | 1 | 1 | 1 | 1 | 1 | 1 | 1 | 1 | 1 |
| Urethane-forming catalyst d-1 | | | | | | | | | | |
| DMTDL | 1 | 1 | 1 | 1 | 1 | 1 | 1 | 1 | 1 | 1 |
| Nurate-forming catalyst d-2 | | | | | | | | | | |
| K-ph | 0.3 | 0.3 | 0.3 | 0.3 | 0.3 | 0.3 | 0.3 | 0.3 | 0.3 | 0.3 |
| Pigment E | | | | | | | | | | |
| CB | 1.5 | 1.5 | 1.5 | 1.5 | 1.5 | 1.5 | 1.5 | 1.5 | 1.5 | 1.5 |
| TiO2 | 1.5 | 1.5 | 1.5 | 1.5 | 1.5 | 1.5 | 1.5 | 1.5 | 1.5 | 1.5 |
| Polyisocyanate B | | | | | | | | | | |
| NP(3/34/26) | 115.8 | 114.6 | 117.5 | 123.6 | 117.5 | 117.5 | 117.1 | 119.3 | 119.3 | 124.2 |
| NCO/OH | 100 | 100 | 100 | 100 | 100 | 100 | 100 | 100 | 100 | 100 |

**Table 3**

| | Ex.11 | Ex.12 | Ex.1 | Ex.14 | Ex.15 | Ex.16 | Ex.17 | Ex.18 | Ex.19 | Ex.20 |
|---|---|---|---|---|---|---|---|---|---|---|
| Polyether polyol a-1 | | | | | | | | | | |
| GLy/3/34 | 70 | 70 | 100 | 100 | 100 | 100 | 100 | 100 | 100 | 100 |
| Polycarbonate diol a-3 | | | | | | | | | | |
| 1,6HD/DMC/55 | 30 | | | | | | | | | |
| 1,4BD/DMC/112 | | 30 | | | | | | | | |
| Glycol a-4 | | | | | | | | | | |
| 1,4BD(1427) | 30 | 30 | | | 30 | 30 | 30 | 30 | 30 | 30 |
| 1,3BD(1427) | | | | 30 | | | | | | |
| EG(1810) | | | 20 | | | | | | | |
| Ultraviolet light absorber c-1 | | | | | | | | | | |
| T-770 | 1 | 1 | 1 | 1 | 1 | 1 | 1 | 1 | 1 | 1 |
| Antioxidant c-2 | | | | | | | | | | |
| I-1035 | 1 | 1 | 1 | 1 | 1 | 1 | 1 | 1 | 1 | 1 |
| Multi-function stabilizer c-4 | | | | | | | | | | |
| JAST-500 | | | | | | | | | | |
| Urethane-forming catalyst d-1 | | | | | | | | | | |
| DMTDL | 1 | 1 | 1 | 1 | | 1 | | | 0.5 | 1 |
| DBTDL | | | | | 1 | | | 1 | | |
| Nurate-forming catalyst d-2 | | | | | | | | | | |
| K-ph | 0.3 | 0.3 | 0.3 | 0.3 | | | 0.5 | 0.3 | 0.1 | 1 |
| Pigment E | | | | | | | | | | |
| CB | 1.5 | 1.5 | 1.5 | 1.5 | 1.5 | 1.5 | 1.5 | 1.5 | 1.5 | 1.5 |
| TiO2 | 1.5 | 1.5 | 1.5 | 1.5 | 1.5 | 1.5 | 1.5 | 1.5 | 1.5 | 1.5 |
| Polyisocyanate B | | | | | | | | | | |
| NP(3/34/26) | 119.3 | 124.2 | 114 | 117.5 | 117.5 | 117.5 | 117.5 | 117.5 | 117.5 | 117.5 |
| NCO/OH | 100 | 100 | 100 | 100 | 100 | 100 | 100 | 100 | 100 | 100 |

**Table 4**

| | Ex.21 | Ex.22 | Ex.23 | Ex.24 | Ex.25 | Ex.26 | Ex.27 | Ex.28 | Ex.29 | Ex.30 |
|---|---|---|---|---|---|---|---|---|---|---|
| Polyether polyol a-1 | | | | | | | | | | |
| GLy/3/34 | 100 | 100 | 100 | 100 | 100 | 100 | 100 | 75 | 50 | 25 |
| TEA/3/34 | | | | | | | | 25 | 50 | 75 |
| Glycol a-4 | | | | | | | | | | |
| 1,4BD(1427) | 30 | 30 | 30 | 30 | 30 | 30 | 30 | 30 | 30 | 30 |
| Ultraviolet light absorber c-1 | | | | | | | | | | |
| T-770 | 1 | 1 | 1 | 1 | 1 | 1 | 1 | 1 | 1 | 1 |
| Antioxidant c-2 | | | | | | | | | | |
| I-1035 | 1 | 1 | 1 | 1 | 1 | 1 | 1 | 1 | 1 | 1 |
| Urethane-forming catalyst d-1 | | | | | | | | | | |
| DMTDL | 1 | 1 | 1 | 1 | 1 | 1 | 1 | 1 | 1 | 1 |
| Nurate-forming catalyst d-2 | | | | | | | | | | |
| K-ph | 0.3 | 0.3 | 0.3 | 0.3 | 0.3 | 0.3 | 0.3 | 0.3 | 0.3 | 0.3 |
| Pigment E | | | | | | | | | | |
| CB | 1.5 | 1.5 | 1.5 | 1.5 | 1.5 | 1.5 | 1.5 | 1.5 | 1.5 | 1.5 |
| TiO2 | 1.5 | 1.5 | 1.5 | 1.5 | 1.5 | 1.5 | 1.5 | 1.5 | 1.5 | 1.5 |
| Polyisocyanate B | | | | | | | | | | |
| N70/30/33.8 | 90.4 | | | | | | | | | |
| N99/1/40.4 | | 75.6 | | | | | | | | |
| NP(3/34/26) | | | | | | | | 117.5 | 117.5 | 117.5 |
| NP(2/28/26) | | | 117.5 | | | | | | | |
| NPE(3, 2/34, 55/26) | | | | 117.5 | | | | | | |
| NPC(3, 2/34, 55/26) | | | | | 117.5 | | | | | |
| NPE(2/55/26) | | | | | | 117.5 | | | | |
| NPC(2/55/26) | | | | | | | 117.5 | | | |
| NCO/OH | 100 | 100 | 100 | 100 | 100 | 100 | 100 | 100 | 100 | 100 |

**Table 5**

| | Ex.31 | Ex.32 | Ex.33 | Ex.34 | Ex.35 | Ex.36 | Ex.37 | Ex.38 | Ex.39 |
|---|---|---|---|---|---|---|---|---|---|
| Polyether polyol a-1 | | | | | | | | | |
| GLy/3/34 | 100 | 100 | 100 | 100 | 100 | 100 | 100 | 100 | 100 |
| Glycol a-4 | | | | | | | | | |
| 1,4BD(1427) | 30 | 30 | 30 | 30 | 30 | 30 | 30 | 30 | 30 |
| Ultraviolet light absorber c-1 | | | | | | | | | |
| T-770 | 1 | 1 | 1 | | | | 0.5 | 0.5 | 0.5 |
| Antioxidant c-2 | | | | | | | | | |
| I-1035 | 1 | 1 | 1 | | | | 0.5 | 0.5 | 0.5 |
| Multi-function stablizer c-4 | | | | | | | | | |
| JAST-500 | | | | 1 | 1 | 1 | 0.5 | 0.5 | 0.5 |
| Urethane-forming catalyst d-1 | | | | | | | | | |
| DMTDL | 1 | 1 | 1 | 1 | 1 | 1 | 1 | 1 | 1 |
| Nurate-forming catalyst d-2 | | | | | | | | | |
| K-ph | 0.3 | | | | | | | | |
| Pigment E | | | | | | | | | |
| CB | 1.5 | 15 | 15 | 15 | 15 | 15 | 1.5 | 1.5 | 1.5 |
| TiO2 | 1.5 | 15 | 15 | 15 | 15 | 15 | 1.5 | 1.5 | 1.5 |
| Polyisocyanate B | | | | | | | | | |
| NP(3/34/26) | 117.5 | | | | | | 117.5 | | |
| NPE(2/55/26) | | 117.5 | | | | | | 117.5 | |
| NPC(2/112/26) | | | 117.5 | | | | | | 117.5 |
| TP(3/34/26) | | | | 117.5 | | | | | |
| TPE(2/55/26) | | | | | 117.5 | | | | |
| TPC(2/112/26) | | | | | | 117.5 | | | |
| NCO/OH | 100 | 100 | 100 | 100 | 100 | 100 | 100 | 100 | 100 |

**Table 6**

| | Com. Ex.1 | Com. Ex.2 | Com. Ex.3 | Com. Ex.4 | Com. Ex.5 | Com. Ex.6 | Com. Ex.7 | Com. Ex.8 | Com. Ex.9 |
|---|---|---|---|---|---|---|---|---|---|
| Skin properties | | | | | | | | | |
| Density (g/cm3) | 1.01 | 1.01 | 1.01 | 1.01 | 1.01 | 1.01 | 1.01 | 1.01 | 1.01 |
| Shore A surface hardness | 90 | 95 | 95 | 96 | 43 | 48 | 96 | 57 | 86 |
| Elongation (%) | 90 | 80 | 110 | 100 | 190 | 160 | 290 | 400 | 90 |
| Flexural modulus (MPa) | 83 | 85 | 85 | 85 | 5 | 7 | 86 | 30 | 82 |
| Soft touch properties | × | × | × | × | ⓞ | ⓞ | × | ○ | Δ |
| Scratch resistance | O | O | O | O | O | O | O | O | O |
| Adhesion properties to polyurethane foam pad | O | O | O | O | O | O | O | O | O |
| Heat resistance | | | | | | | | | |
| Melt mark after 110°C × 1000hr | None | None | None | None | None | None | None | Observed | None |
| Durability test 1 | | | | | | | | | |
| ΔE after 100°C × 200hr | 0.6 | 0.5 | 0.5 | 0.7 | 0.7 | 0.6 | 0.5 | Melted | 0.3 |
| ΔE after 83°CFOM × 200hr | 0.5 | 0.6 | 0.6 | 0.6 | 1.0 | 0.5 | 0.3 | Melted | 0.3 |
| Elongation after 110°C × 1200hr (%) | 80 | 75 | 98 | 98 | 180 | 155 | 230 | Melted | 75 |
| Durability test 2 | | | | | | | | | |
| ΔE after 100°C × 400hr | 0.9 | 0.7 | 0.8 | 1.1 | 0.9 | 0.8 | 0.6 | Melted | 0.6 |
| ΔE after 83°CFOM × 400hr | 0.8 | 0.8 | 0.7 | 0.9 | 1.3 | 0.7 | 0.4 | Melted | 0.4 |
| Elongation after 110°C × 2400hr (%) | 55 | 65 | 85 | 90 | 160 | 150 | 190 | Melted | 70 |

**Table 7**

| | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|
| Skin properties | | | | | | | | | | |
| Density (g/cm3) | 1.01 | 1.01 | 1.01 | 1.01 | 1.01 | 1.01 | 1.01 | 1.01 | 1.01 | 1.01 |
| Shore A surface hardness | 65 | 62 | 64 | 73 | 74 | 65 | 64 | 71 | 74 | 75 |
| Elongation (%) | 280 | 250 | 260 | 220 | 190 | 280 | 270 | 300 | 290 | 260 |
| Flexural modulus (MPa) | 45 | 41 | 42 | 55 | 54 | 45 | 44 | 49 | 58 | 58 |
| Soft touch properties | ⓞ | ⓞ | ⓞ | ⓞ | ⓞ | ⓞ | ⓞ | ⓞ | ⓞ | ⓞ |
| Scratch resistance | O | O | O | O | O | O | O | O | O | O |
| Adhesion properties to polyurethane foam pad | O | O | O | O | O | O | O | O | O | O |
| Heat resistance | | | | | | | | | | |
| Melt mark after 110°C × 1000hr | None | None | None | None | None | None | None | None | None | None |
| Durability test 1 | | | | | | | | | | |
| ΔE after 110°C × 200hr | 0.5 | 0.5 | 0.6 | 0.4 | 0.4 | 3.4 | 0.6 | 0.5 | 1.0 | 0.5 |
| ΔE after 83°CFOM × 200hr | 0.6 | 0.5 | 0.6 | 0.5 | 0.4 | 5.2 | 0.5 | 0.4 | 0.9 | 0.5 |
| Elongation after 110°C × 1200hr (%) | 250 | 240 | 230 | 210 | 170 | 140 | 250 | 280 | 270 | 220 |
| Durability test 2 | | | | | | | | | | |
| ΔE after 110°C × 400hr | 0.7 | 0.8 | 0.9 | 0.6 | 0.5 | 6.7 | 0.9 | 0.8 | 1.2 | 0.8 |
| ΔE after 83°CFOM X 400hr | 0.9 | 0.7 | 0.8 | 0.7 | 0.6 | 10.5 | 0.7 | 0.7 | 1.3 | 0.7 |
| Elongation after 110°C × 2400hr (%) | 220 | 210 | 210 | 190 | 150 | 24 | 230 | 250 | 230 | 190 |

**Table 8**

| | Ex.11 | Ex.12 | Ex.13 | Ex.14 | Ex.15 | Ex.16 | Ex.17 | Ex.18 | Ex.19 | Ex.20 |
|---|---|---|---|---|---|---|---|---|---|---|
| Skin properties | | | | | | | | | | |
| Density(g/cm3) | 1.01 | 1.01 | 1.01 | 1.01 | 1.01 | 1.01 | 1.01 | 1.01 | 1.01 | 1.01 |
| Shore A surface hardness | 71 | 74 | 68 | 63 | 64 | 63 | 63 | 63 | 63 | 60 |
| Elongation (%) | 310 | 270 | 250 | 250 | 250 | 240 | 230 | 250 | 250 | 210 |
| Flexural modulus (MPa) | 55 | 56 | 47 | 42 | 43 | 43 | 43 | 43 | 43 | 40 |
| Soft touch properties | ⓞ | ⓞ | ⓞ | ⓞ | ⓞ | ⓞ | ⓞ | ⓞ | ⓞ | ⓞ |
| Scratch resistance | O | O | O | O | O | O | O | O | O | O |
| Adhesion properties to Polyurethane foam pad | O | O | O | O | O | O | O | O | O | O |
| Heat resistance | | | | | | | | | | |
| Mlt mark after 110°C × 1000hr | None | None | None | None | None | None | None | None | None | None |
| Durability test 1 | | | | | | | | | | |
| ΔE after 110°C × 200hr | 0.4 | 0.3 | 0.5 | 0.6 | 0.5 | 0.5 | 0.3 | 0.6 | 0.4 | 1.0 |
| ΔE after 83°CFOM × 200hr | 0.3 | 0.5 | 0.5 | 0.5 | 0.4 | 0.7 | 0.5 | 0.4 | 0.5 | 1.2 |
| Elongation after 110°C × 1200hr (%) | 290 | 260 | 220 | 230 | 230 | 230 | 210 | 220 | 240 | 195 |
| Durability test 2 | | | | | | | | | | |
| ΔE after 100°C × 400hr | 0.5 | 0.6 | 0.8 | 0.9 | 0.8 | 0.7 | 0.6 | 0.8 | 0.6 | 1.3 |
| ΔE after 83°CFOM × 400hr | 0.6 | 0.8 | 0.7 | 0.8 | 0.7 | 0.9 | 0.8 | 0.7 | 0.6 | 1.4 |
| Elongation after 110°C x 2400hr (%) | 260 | 230 | 180 | 190 | 200 | 210 | 160 | 210 | 210 | 170 |

**Table 9**

| | Ex.21 | Ex.22 | Ex.23 | Ex.24 | Ex.25 | Ex.26 | Ex.27 | Ex.28 | Ex.29 | Ex.30 |
|---|---|---|---|---|---|---|---|---|---|---|
| Skin properties | | | | | | | | | | |
| Density (g/cm3) | 1.01 | 1.01 | 1.01 | 1.01 | 1.01 | 1.01 | 1.01 | 1.01 | 1.01 | 1.01 |
| Shore A surface hardness | 78 | 51 | 64 | 73 | 76 | 76 | 77 | 65 | 64 | 65 |
| Elongation (%) | 190 | 320 | 280 | 390 | 380 | 410 | 400 | 250 | 240 | 230 |
| Flexural modulus (MPa) | 60 | 12 | 40 | 55 | 56 | 56 | 57 | 43 | 44 | 43 |
| Soft touch properties | ⓞ | ⓞ | ⓞ | ⓞ | ⓞ | ⓞ | ⓞ | ⓞ | ⓞ | ⓞ |
| Scratch resistance | O | O | O | O | O | O | O | O | O | O |
| Adhesion properties to polyurethane foam pad | O | O | O | O | O | O | O | O | O | O |
| Heat resistance | | | | | | | | | | |
| Melt mark after 110°C × 1000hr | None | None | None | None | None | None | None | None | None | None |
| Durability test 1 | | | | | | | | | | |
| ΔE after 110°C × 200hr | 1.0 | 0.9 | 0.5 | 0.5 | 0.4 | 0.8 | 0.6 | 1.0 | 0.9 | 1.4 |
| ΔE after 83°C FOM × 200hr | 0.9 | 1.1 | 0.3 | 0.7 | 0.5 | 0.9 | 0.6 | 1.1 | 1.1 | 1.2 |
| Elongation after 110°C × 1200hr (%) | 180 | 280 | 260 | 340 | 350 | 380 | 360 | 210 | 200 | 180 |
| Durability test 2 | | | | | | | | | | |
| ΔE after 110°C × 400hr | 1.4 | 1.3 | 0.8 | 0.9 | 0.8 | 1.1 | 0.9 | 1.7 | 2.2 | 3.2 |
| ΔE after 83°C FOM × 400hr | 1.3 | 1.4 | 0.7 | 1.1 | 0.7 | 1.3 | 0.8 | 1.9 | 2.5 | 4.3 |
| Elongation after 110°C × 2400hr (%) | 150 | 150 | 220 | 310 | 320 | 320 | 330 | 140 | 130 | 95 |

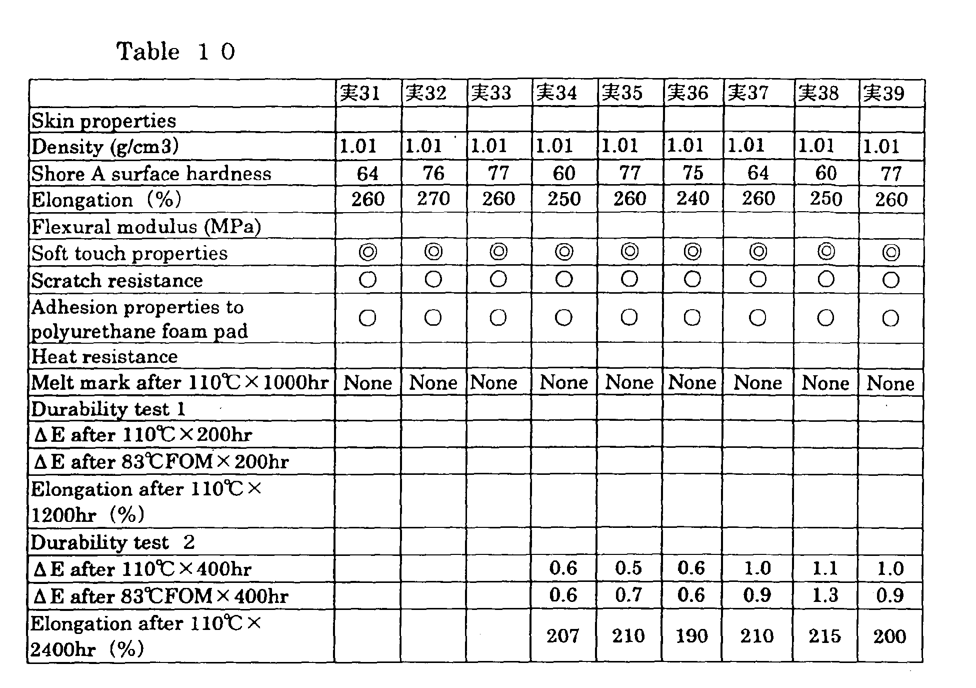

### Example 40

A composite of a polyurethane foam and a core was formed in the following manner using the polyurethane skin obtained in Example 3.

The polyurethane skin obtained in Example 3 was placed in a bottom force of an aluminum test mold having been adjusted to a temperature of 30 to 40°C and having a size of 300 mm (length)× 400 mm (width) × 15 mm (thickness), thereon was poured the following semirigid polyurethane foam reaction solution, and then a top force having been charged with a commercially available ABS resin (available from Mitsubishi Resin) having a thickness of 3 mm was shut to close the mold. The semirigid polyurethane foam reaction solution was cured at room temperature for 4 minutes to foam an integral composite consisting of three layers of polyurethane skin/semirigid polyurethane foam/ABS core, and the composite was removed from the mold.

Semirigid polyurethane foam reaction solution
(1) Polyol component
   Polyether polyol ^{*1}: 100 parts
   Water: 3 parts
   Triethanolamine: 2 parts
   Diethanolamine: 1 part
   Triethylamine: 0.5 part
   33% Dipropylene glycol solution of triethylenediamine: 0.5 part
(2) Isocyanate component
   Polymeric MDI ^{*2}: 65.8 parts

*1: polyether polyol obtained by addition polymerization of glycerol with propylene oxide:ethylene oxide (85:15) and having a hydroxyl value of 34 mgKOH/g
*2: Cosmonate M-200 available from Mitsui Chemicals, Inc.

In the composite, the polyurethane skin and the semirigid polyurethane foam, and the semirigid polyurethane foam and the ABS core were respectively firmly bonded to each other, and the composite exhibited excellent integrity. Further, because of its excellent soft tough properties, the composite had sophisticated appearance and was favorable as automobile interior trim. Moreover, the composite may be easily recycled because only urethane resin is left by separating the ABS resin from the composite.

## Claims

1. A thermoset polyurethane resin having the following properties:
(i) the Shore A surface hardness is in the range of 50 to 85,
(ii) the flexural modulus is in the range of 8 to 80 MPa,
(iii) the elongation is in the range of 130 to 600 %, and
(iv) no melt mark is observed after exposure to an atmosphere of 110°C for 1000 hours.

2. The thermoset polyurethane resin as claimed in claim 1, further having the following properties:
(v) the color difference ΔE₁₁₀ value that indicates a change in color after exposure to an atmosphere of 110°C for 200 hours is not more than 1.5,
(vi) the color difference ΔE₈₃ value that indicates a change in color after exposure to a carbon arc fadeometer with a black panel of 83°C for 200 hours is not more than 1.5, and
(vii) the elongation after exposure to an atmosphere of 110°C for 1200 hours is in the range of 150 to 600 %.

3. The thermoset polyurethane resin as claimed in claim 1 or 2, further having the following properties:
(viii) the color difference ΔE₁₁₀ value that indicates a change in color after exposure to an atmosphere of 110°C for 400 hours is not more than 1.5,
(ix) the color difference ΔE₈₃ value that indicates a change in color after exposure to a carbon arc fadeometer with a black panel of 83°C for 400 hours is not more than 1.5, and
(x) the elongation after exposure to an atmosphere of 110°C for 2400 hours is in the range of 150 to 600 %.

4. The thermoset polyurethane resin as claimed in one of claims 1 to 3, being a two-component type thermoset polyurethane resin obtainable by the reaction of a polyol component (A) with an organic polyisocyanate component (B).

5. The thermoset polyurethane resin as claimed in one of claims 1 to 4, being obtainable by the reaction of a polyol component (A) with an organic polyisocyanate component (B), wherein
the polyol component (A) comprises a compound selected from the group consisting of
(a-1) a polyether polyol obtainable by addition polymerization of an active hydrogen compound with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g; and
another compound of (a-4) a non-amine type glycol having an average functional group number of 1.5 to 2.5, and a hydroxyl value of 1000 to 2000 mgKOH/g,
the latter (a-4) compound being in an amount of 8 to 40 parts by weight based on 100 parts by weight of the former compound selected from the group of (a-1), (a-2) and (a-3), and
wherein the organic polyisocyanate component (B) contains a polyfunctional compound obtainable from a polycyclic aliphatic polyisocyanate compound and having 3 or more isocyanate groups, in an amount of 1 to 40 % by weight based on the whole amount of the organic polyisocyanate component.

6. The thermoset polyurethane resin as claimed in claim 5, wherein the polyisocyanate component (B) is a mixture of
(b-1) a compound represented by the following formula (F2): 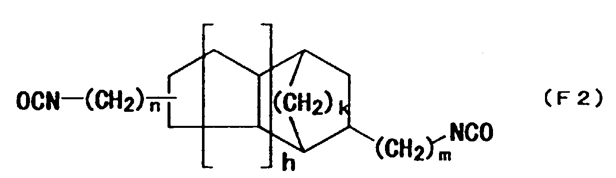 wherein K is an integer of 0 to 2, m and n are each an integer of 1 to 5, and h is an integer of 0 to 2, with the proviso that h and k are not both 0, and
(b-2) a polyfunctional compound obtainable from a compound represented by the formula (F2) and having 3 or more isocyanate groups; and
the mixing weight ratio (b-1)/(b-2) is in the range of 99/1 to 60/40.

7. The thermoset polyurethane resin as claimed in claim 6, wherein the compound represented by the formula (F2) of the compound (b-1) and those compounds used in the polyfunctional compound (b-2) are each a compound wherein h is 0 and k is 1 in the formula (F2).

8. The thermoset polyurethane resin as claimed in one of claims 5 to 7, wherein the polyol component (A) comprises the non-amine type glycol (a-4) and a combination of the polyether polyol (a-1) with one or both of the polyester diol (a-2) and the polycarbonate diol (a-3), wherein the (a-4) compound being in the range of 8 to 40 parts by weight based on 100 parts of the combination, and wherein one or both of the (a-2) compound and the (a-3) compound being in the range of 1 to 50 parts by weight based on 100 to 50 parts by weight of the (a-1) compound.

9. The thermoset polyurethane resin as claimed in one of claims 5 to 8, wherein the polyol component (A) comprises at a compound selected from the group consisting of the polyether polyol (a-1), the polyester diol (a-2) and the polycarbonate diol (a-3), and a compound of the non-amine type glycol (a-4) in an amount of 8 to 40 parts by weight based on 100 parts by weight of the former compound selected from the group of (a-1), (a-2) and (a-3), and
further comprises a stabilizer (C) selected from the group consisting of an ultraviolet light absorber (c-1), an antioxidant (c-2), a heat stabilizer (c-3) and a multi-functional stabilizer (c-4), in an amount of 0.5 to 5.0 parts by weight based on 100 parts by weight of the compound selected from the group consisting of (a-1), (a-2) and (a-3), and a catalyst (D) selected from the group consisting of an urethane-forming catalyst (d-1) and an isocyanurate-forming catalyst (d-2), in an amount of 0.5 to 3.0 parts by weight based on 100 parts by weight of the compound selected from the group of (a-1), (a-2) and (a-3).

10. The thermoset polyurethane resin as claimed in one of claims 5 to 9, wherein the polyol component (A) further comprises a pigment (E) in an amount of 0.1 to 10 parts by weight based on 100 parts by weight of the compound selected from the group of (a-1), (a-2) and (a-3)..

11. The thermoset polyurethane resin as claimed in claim 9 or 10, wherein as the stabilizer (C) used is a benzotriazolyl-alkylbisphenol compound represented by the following formula (F1): 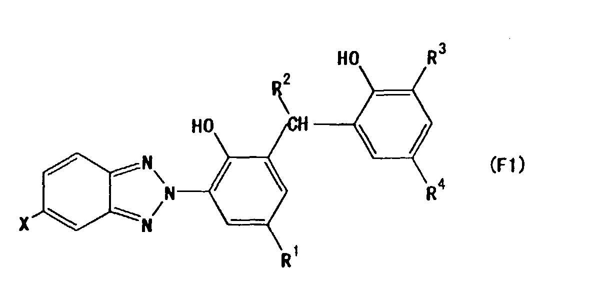 wherein X is a hydrogen atom, a halogen atom, an alkyl group, a cycloalkyl group, an alkoxy group or an alkylaryl group, R¹ is an alkyl group, a cycloalkyl group, an aryl group, an alkoxy group or an arylalkyl group, R² is a hydrogen atom, an alkyl group or an aryl group, R³ and R⁴ are each an alkyl group, a cycloalkyl group, an aryl group or an alkylaryl group, and R³ and R⁴ may be the same or different.

12. The thermoset polyurethane resin as claimed in one of claims 6 to 11, wherein the polyisocyanate component (B) is a partially urethane modified prepolymer obtainable by subjecting a mixture of the compound (b-1) represented by the formula (F2) and the polyfunctional compound (b-2) obtainable from a compound represented by the formula (F2) and having 3 or more isocyanate groups, in a mixing weight ratio (b-1)/(b-2) of 99/1 to 60/40, to reaction with a compound selected from the group consisting of
(a-5) a polyether polyol obtainable by addition polymerization of an active hydrogen compound with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

13. The thermoset polyurethane resin as claimed in one of claims 1 to 4, being obtainable by the reaction of a polyol component (A) with an organic polyisocyanate component (B), wherein
the polyol component (A) comprises a compound selected from the group consisting of
(a-1-2) a polyether polyol obtainable by addition polymerization of a non-amine type polyhydric alcohol with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g, and
another compound of (a-4) a non-amine type glycol having an average functional group number of 1.5 to 2.5 and a hydroxyl value of 1000 to 2000 mgKOH/g, the latter (a-4) compound being in an amount of 8 to 40 parts by weight based on 100 parts by weight of the former compound selected from the group of (a-1-2), (a-2) and (a-3), and
wherein the organic polyisocyanate component (B) contains a polyfunctional compound obtainable from a polycyclic aliphatic polyisocyanate compound and having 3 or more isocyanate groups, in an amount of 1 to 40 % by weight based on the whole amount of the organic polyisocyanate component (B).

14. The thermoset polyurethane resin as claimed in claim 13, wherein the polyisocyanate component (B) is a mixture of:
(b-1) a compound represented by the following formula (F2): 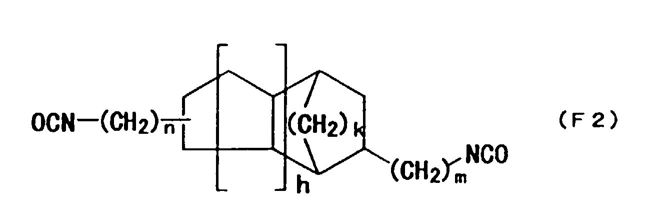 wherein K is an integer of 0 to 2, m and n are each an integer of 1 to 5, and h is an integer of 0 to 2, with the proviso that h and k are not both 0, and
(b-2) a polyfunctional compound obtainable from a compound represented by the formula (F2) and having 3 or more isocyanate groups, and
the mixing weight ratio (b-1)/(b-2) is in the range of 99/1 to 60/40.

15. The thermoset polyurethane resin as claimed in claim 14, wherein the compound represented by the formula (F2) of the compound (b-1) and those compounds used in the polyfunctional compound (b-2) are each a compound wherein h is 0 and k is 1 in the formula (F2).

16. The thermoset polyurethane resin as claimed in one of claims 13 to 15, wherein the polyol component (A) comprises the non-amine type glycol (a-4) and a combination of the polyether polyol (a-1-2) with one or both of the polyester diol (a-2) and the polycarbonate diol (a-3), wherein the (a-4) compound being in the range of 8 to 40 parts by weight based on 100 parts of the combination, and wherein one or both of the (a-2) compound and the (a-3) compound being in the range of 1 to 50 parts by weight based on 100 to 50 parts by weight of the (a-1-2) compound.

17. The thermoset polyurethane resin as claimed in one of claims 13 to 16, wherein the polyol component (A) comprises a compound selected from the group consisting of the polyether polyol (a-1-2), the polyester diol (a-2) and the polycarbonate diol (a-3), and a compound of the non-amine type glycol (a-4) in an amount of 8 to 40 parts by weight based on 100 parts by weight of the former compound selected from the group of (a-1-2), (a-2) and (a-3), and
further comprises a stabilizer (C) selected from the group consisting of an ultraviolet light absorber (c-1), an antioxidant (c-2), a heat stabilizer (c-3) and a multi-functional stabilizer (c-4), in an amount of 0.5 to 5.0 parts by weight based on 100 parts by weight of the compound selected from the group of (a-1-2), (a-2) and (a-3), and a catalyst (D) selected from the group consisting of an urethane-forming catalyst (d-1) and an isocyanurate-forming catalyst (d-2) in an amount of 0.5 to 3.0 parts by weight based on 100 parts by weight of the compound selected from the group of the (a-1-2), (a-2) and (a-3).

18. The thermoset polyurethane resin as claimed in one of claims 13 to 17, wherein the polyol component (A) further comprises a pigment (E) in an amount of 0.1 to 10 parts by weight based on 100 parts by weight of the former compound selected from the group of (a-1-2), (a-2) and (a-3).

19. The thermoset polyurethane resin as claimed in claim 17 or 18, wherein as the stabilizer (C) used is a benzotriazolyl-alkylbisphenol compound represented by the following formula (F1): 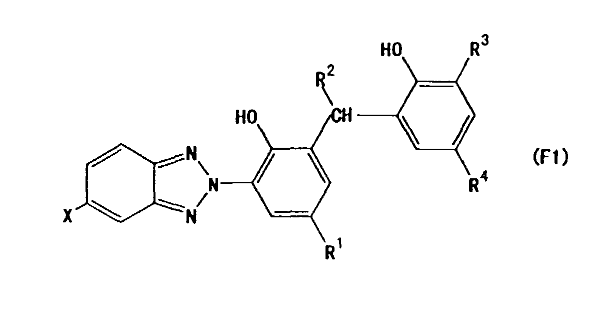 wherein X is a hydrogen atom, a halogen atom, an alkyl group, a cycloalkyl group, an alkoxy group or an alkylaryl group, R¹ is an alkyl group, a cycloalkyl group, an aryl group, an alkoxy group or an arylalkyl group, R² is a hydrogen atom, an alkyl group or an aryl group, R³ and R⁴ are each an alkyl group, a cycloalkyl group, an aryl group or an alkylaryl group, and R³ and R⁴ may be the same or different.

20. The thermoset polyurethane resin as claimed in one of claims 14 to 19, wherein the polyisocyanate component (B) is a partially urethane modified prepolymer obtainable by subjecting a mixture of the compound (b-1) represented by the formula (F2) and the polyfunctional compound (b-2) obtainable from a compound represented by the formula (F2) and having 3 or more isocyanate groups, in a mixing weight ratio (b-1)/(b-2) of 99/1 to 60/40, to reaction with at least one compound selected from the group consisting of
(a-5-2) a polyether polyol obtainable by addition polymerization of a non-amine type polyhydric alcohol with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

21. A method for production of a thermoset polyurethane resin, comprising conducting a spray molding or a RIM by using a polyol component (A) and an organic polyisocyanate component (B), wherein
the polyol component (A) comprises
a compound selected from the group consisting of:
(a-1) a polyether polyol obtainable by addition polymerization of an active hydrogen compound with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g, and
a compound of (a-4) a non-amine type glycol having an average functional group number of 1.5 to 2.5 and a hydroxyl value of 1000 to 2000 mgKOH/g, in an amount of 8 to 40 parts by weight based on 100 parts by weight of the former compound selected from the group of (a-1), (a-2) and (a-3), and
wherein the organic polyisocyanate component (B) has a polyfunctional compound obtainable from a polycyclic aliphatic polyisocyanate compound and having 3 or more isocyanate groups, in an amount of 1 to 40 % by weight based on the whole amount of the organic polyisocyanate component (B).

22. A method for the production of a thermoset polyurethane resin as claimed in claim 21, wherein the polyisocyanate component (B) is a mixture of
(b-1) a compound represented by the following formula (F2): 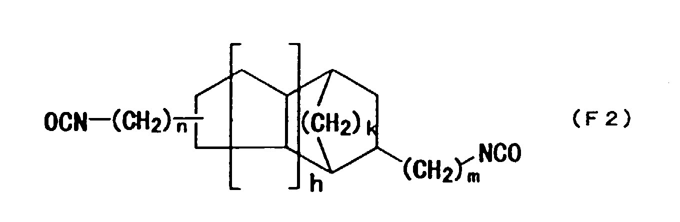 wherein K is an integer of 0 to 2, m and n are each an integer of 1 to 5, and h is an integer of 0 to 2, with the proviso that h and k are not both 0, and
(b-2) a polyfunctional compound obtainable from a compound represented by the formula (F2) and having 3 or more isocyanate groups; and
the mixing weight ratio (b-1)/(b-2) is in the range of 99/1 to 60/40.

23. A method for the production of a thermoset polyurethane resin, comprising conducting a spray molding or a RIM by using a polyol component (A) and an organic polyisocyanate component (B), wherein
the polyol component (A) comprises
a compound selected from the group consisting of:
(a-1-2) a polyether polyol obtainable by addition polymerization of a non-amine type polyhydric alcohol with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g, and
a compound of (a-4) a non-amine type glycol having an average functional group number of 1.5 to 2.5 and a hydroxyl value of 1000 to 2000 mgKOH/g, in an amount of 8 to 40 parts by weight based on 100 parts by weight of the former compound selected from the group of (a-1-2), (a-2) and (a-3), and
wherein the organic polyisocyanate component (B) has a polyfunctional compound obtainable from a polycyclic aliphatic polyisocyanate compound and having 3 or more isocyanate groups, in an amount of 1 to 40 % by weight based on the whole amount of the organic polyisocyanate component (B).

24. A method for the production of a thermoset polyurethane resin as claimed in claim 23, wherein the polyisocyanate component (B) is a mixture of
(b-1) a compound represented by the following formula (F2): 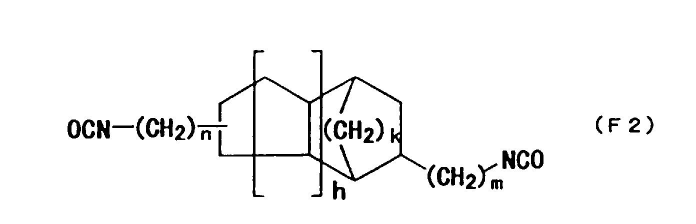 wherein K is an integer of 0 to 2, m and n are each an integer of 1 to 5, and h is an integer of 0 to 2, with the proviso that h and k are not both 0, and
(b-2) a polyfunctional compound obtainable from a compound represented by the formula (F2) and having 3 or more isocyanate groups, and
the mixing weight ratio (b-1)/(b-2) is in the range of 99/1 to 60/40.

25. A sheet or film comprising the thermoset polyurethane resin according to one of claims 1 to 20 or the thermoset polyurethane resin obtained by the method according to one of claims 21 to 24.

26. A laminate comprising a skin layer of the thermoset polyurethane resin sheet or film according to claim 25 and one of a foam and a core.

27. The laminate as claimed in claim 26, wherein the foam is a polyurethane foam.

28. An automobile instrument panel formed from the laminate according to claim 27.

29. An urethane prepolymer obtainable from a polyol component (Aₚᵣₑ) and an organic polyisocyanate component (B), wherein the organic polyisocyanate component (B) is a combination of:
(b-1) a compound represented by the following formula (F2): 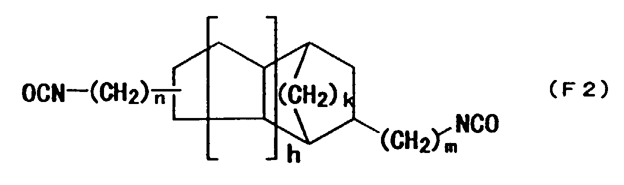 wherein K is an integer of 0 to 2, m and n are each an integer of 1 to 5, and h is an integer of 0 to 2, with the proviso that h and k are not both 0, and
(b-2) a polyfunctional compound obtainable from a compound represented by the formula (F2) and having 3 or more isocyanate groups; and
the mixing weight ratio (b-1)/(b-2) is in the range of 99/1 to 60/40.

30. The urethane prepolymer as claimed in claim 29, wherein the compound represented by the formula (F2) of the compound (b-1) and those compounds used in the polyfunctional compound (b-2) are each a compound wherein h is 0 and k is 1 in the formula (F2).

31. The urethane prepolymer as claimed in claim 30, wherein the polyfunctional compound (b-2) is an isocyanurate compound.

32. The urethane prepolymer as claimed in one of claim 29 to 31, wherein the polyol component (Apre) is a compound selected from the group consisting of
(a-5) a polyether polyol obtainable by addition polymerization of an active hydrogen compound with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

33. The urethane prepolymer as claimed in one of claim 29 to 31, wherein the polyol component (Aₚᵣₑ) is a compound selected from the group consisting of
(a-5-2) a polyether polyol obtainable by addition polymerization of a non-amine type polyhydric alcohol with an alkylene oxide and having an average functional group number of 2 to 3 and a hydroxyl value of 24 to 120 mgKOH/g,
(a-6) a polyester diol having a hydroxyl value of 55 to 120 mgKOH/g, and
(a-7) a polycarbonate diol having a hydroxyl value of 55 to 120 mgKOH/g.

34. A thermoset polyurethane resin obtainable by subjecting the prepolymer according to one of claims 29 to 33 to reaction with a polyol component (A).

35. A polyol composition comprising a polyol component (A) and a benzotriazolyl-alkylbisphenol compound represented by the following formula (F1): 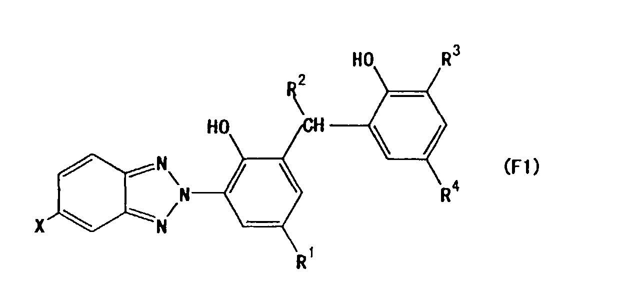 wherein X is a hydrogen atom, a halogen atom, an alkyl group, a cycloalkyl group, an alkoxy group or an alkylaryl group, R¹ is an alkyl group, a cycloalkyl group, an aryl group, an alkoxy group or an arylalkyl group, R² is a hydrogen atom, an alkyl group or an aryl group, R³ and R⁴ are each an alkyl group, a cycloalkyl group, an aryl group or an alkylaryl group, and R³ and R⁴ may be the same or different.

36. The polyol composition as claimed in claim 35, wherein, in the formula (Fl) representing the benzotriazolyl-alkylbisphenol compound, R² is hydrogen, R¹, R³ and R⁴ are each an alkyl group of 1 to 8 carbon atoms, and R¹, R³ and R⁴ are the same or different.

37. The polyol composition as claimed in claim 35, wherein the benzotriazolyl-alkylbisphenol compound is 6-(2-benzotriazolyl)-4-t-octyl-6'-t-butyl-4'-methyl-2,2'-methylene bisphenol.

38. The polyol composition as claimed in one of claims 34 to 37, wherein the benzotriazolyl-alkylbisphenol compound is contained in an amount of 0.01 to 50 % by weight.

39. The polyol composition as claimed in one of claims 34 to 38, wherein the polyol component (A) comprises
a compound selected from the group consisting of
(a-1) a polyether polyol obtainable by addition polymerization of an active hydrogen compound with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g, and
a compound of (a-4) a non-amine type glycol having an average functional group number of 1.5 to 2.5 and a hydroxyl value of 1000 to 2000 mgKOH/g, in an amount of 8 to 40 parts by weight based on 100 parts by weight of the former compound selected from the group of (a-1), (a-2) and (a-3).

40. The polyol composition as claimed in one of claims 34 to 38, wherein the polyol component (A) comprises
a compound selected from the group consisting of
(a-1-2) a polyether polyol obtainable by addition polymerization of a non-amine type polyhydric alcohol with an alkylene oxide and having an average functional group number of 2 to 4 and a hydroxyl value of 24 to 120 mgKOH/g,
(a-2) a polyester diol having a hydroxyl value of 50 to 120 mgKOH/g, and
(a-3) a polycarbonate diol having a hydroxyl value of 50 to 120 mgKOH/g, and
a compound of (a-4) a non-amine type glycol having an average functional group number of 1.5 to 2.5 and a hydroxyl value of 1000 to 2000 mgKOH/g, in an amount of 8 to 40 parts by weight based on 100 parts by weight of the former compound selected from the group of (a-1-2), (a-2) and (a-3).

41. A thermoset polyurethane resin obtainable by subjecting the polyol composition according to one of claims 34 to 40 to reaction with an organic polyisocyanate component (B).

42. The thermoset polyurethane resin as claimed in claim 40, wherein the prepolymer according to one of claims 29 to 32 is used as the organic polyisocyanate component (B).
